(19) Europäisches Patentamt
European Patent Office
Office européen des brevets

(11) **EP 3 860 241 A1**

(12) **EUROPEAN PATENT APPLICATION**
published in accordance with Art. 153(4) EPC

(43) Date of publication:
04.08.2021 Bulletin 2021/31

(51) Int Cl.:
*H04W 64/00* (2009.01)    *H04W 16/28* (2009.01)

(21) Application number: 19864742.2

(22) Date of filing: 25.04.2019

(86) International application number:
PCT/JP2019/017791

(87) International publication number:
WO 2020/066103 (02.04.2020 Gazette 2020/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.09.2018 PCT/JP2018/036145

(71) Applicant: Mitsubishi Electric Corporation
Tokyo 100-8310 (JP)

(72) Inventors:
• HASEGAWA, Fumihiro
Tokyo 100-8310 (JP)
• TAIRA, Akinori
Tokyo 100-8310 (JP)
• MOCHIZUKI, Mitsuru
Tokyo 100-8310 (JP)
• SHIMODA, Tadahiro
Tokyo 100-8310 (JP)

(74) Representative: Zech, Stefan Markus
Meissner Bolte Patentanwälte
Rechtsanwälte Partnerschaft mbB
Postfach 86 06 24
81633 München (DE)

(54) **BASE STATION, TERMINAL DEVICE, POSITIONING METHOD AND WIRELESS COMMUNICATION SYSTEM**

(57) A base station (10) according to the present invention includes a reception processing unit (104) that receives a signal for use in positioning transmitted from a terminal device, and a positioning processing unit (106) that computes the location of the terminal device using the signal for use in positioning.

FIG.2

**Description**

Field

The present invention relates to a base station that determines the location of a terminal device, to a terminal device, to a positioning method, and to a wireless communication system.

Background

A wireless communication system is subject to frequency selectivity and temporal variation in the transmission channel due to multipath fading caused by reflection of a transmission signal from the transmitting device at a building and/or the like, and due to Doppler variation caused by movement of the receiving device. In a multipath environment in which multipath fading occurs, a signal received by the receiving device is a signal including a symbol directly arriving from the transmitting device being subject to interference from a symbol arriving with a delay due to reflection at a building and/or the like.

To achieve an improved reception characteristic in a transmission channel having frequency selectivity, a wireless communication system may use an orthogonal frequency division multiplexing (hereinafter referred to as OFDM) transmission scheme, which is a multiple carrier (MC) block transmission scheme. In Third Generation Partnership Project (3GPP), an OFDM scheme is used in downlink, and an OFDM scheme and a discrete Fourier transform-spread-OFDM (DFT-s-OFDM) scheme are used in uplink for communication.

In 3GPP Release 15, New Radio (NR) has been studied and standardized for a fifth generation (5G) mobile communication system (see Non-Patent Literatures 1 to 3). NR intends to increase communication capacity by performing beam forming for the user using a multielement antenna.

Note that technologies for physical and higher layers are standardized in Long Term Evolution (LTE) for positioning purposes. For example, the standard provides the Cell_identification (ID) method, the Enhanced Cell ID (ECID) method, the Observed Time Difference Of Arrival (OTDOA) method, and the Uplink Time Difference Of Arrival (UTDOA) method. Non-Patent Literature 4 discloses a positioning method using the OTDOA method, in which a Positioning Reference Signal (PRS) is transmitted toward a terminal device from each of multiple base stations, and the terminal device determines the difference between the reception times of PRSs to estimate the location.

In addition, the ECID method estimates the time required from transmission to reception in uplink and in downlink, and the angle of arrival to identify the location of a terminal device. A Cell Reference Signal (CRS) is used in downlink, and a Sounding Reference Signal (SRS) is used in uplink. Moreover, a base station including a transmitting device that transmits a PRS for use in positioning in the OTDOA method allocates the PRS in time domain and in frequency domain to avoid the position of a Cell-specific Reference Signal (CRS) used only in LTE. A CRS is a cell-specific reference signal defined in an LTE specification to be used, for example, for measurement of downlink reception quality.

Citation List

Non Patent Literature

Non Patent Literature 1: 3GPP, "Physical layer procedures for data (Release 15)", TS38.214 version 15.2.0, 2018-06.
Non Patent Literature 2: 3GPP, "Physical channels and modulation (Release 15)", TS38.211 version 15.2.0, 2018-06.
Non Patent Literature 3: 3GPP, "Physical layer procedures for control (Release 15)", TS38.213 version 15.2.0, 2018-06.
Non Patent Literature 4: S. Fischer, "Observed Time Difference Of Arrival (OTDOA) Positioning in 3GPP LTE", Qualcomm White Paper

Summary

Technical Problem

However, the Cell_ID method, the ECID method, the OTDOA method, and the UTDOA method for use in LTE assume an LTE network, and accordingly cannot sometimes be used without change in a system other than an LTE system, including a 5G mobile communication system applied to a wide range of frequency bands. Therefore, a terminal location can be desirably computed also in a system other than an LTE system.

The present invention has been made in view of the foregoing, and it is an object of the present invention to provide a base station capable of computing a terminal location.

Solution to Problem

In order to solve the above-stated problem and achieve the object, a base station according to the present invention includes: a reception processing unit to receive a signal for use in positioning, transmitted from a terminal device; and a positioning processing unit to compute a location of the terminal device using the signal for use in positioning.

Advantageous Effects of Invention

The present invention provides an advantage in that a base station capable of computing a terminal location can be provided.

Brief Description of Drawings

FIG. 1 is a diagram illustrating a configuration of a wireless communication system according to a first embodiment.
FIG. 2 is a diagram illustrating functional blocks of the base station according to the first embodiment.
FIG. 3 is a diagram illustrating a control circuit according to the first embodiment.
FIG. 4 is a diagram illustrating an example of positioning performed by the base station according to the first embodiment.
FIG. 5 is a flowchart illustrating a procedure of positioning according to the first embodiment.
FIG. 6 is a diagram illustrating another example of positioning performed by the base station according to the first embodiment.
FIG. 7 is another flowchart illustrating a procedure of positioning according to the first embodiment.
FIG. 8 is a diagram illustrating an example of positioning performed by the base station and by the terminal device according to the first embodiment.
FIG. 9 is a diagram illustrating positioning using two TRPs according to the first embodiment.
FIG. 10 is a diagram illustrating positioning using an OTDOA method according to a second embodiment.
FIG. 11 is a flowchart illustrating a procedure of positioning in the OTDOA method according to the second embodiment.
FIG. 12 is a diagram illustrating a first example of mapping of a PRS according to the second embodiment.
FIG. 13 is a diagram illustrating a second example of mapping of a PRS according to the second embodiment.
FIG. 14 is a diagram illustrating a third example of mapping of a PRS according to the second embodiment.
FIG. 15 is a diagram illustrating a fourth example of mapping of a PRS according to the second embodiment.
FIG. 16 is a diagram illustrating a fifth example of mapping of a PRS according to the second embodiment.
FIG. 17 is a diagram illustrating a sixth example of mapping of a PRS according to the second embodiment.
FIG. 18 is a diagram illustrating a seventh example of mapping of a PRS according to the second embodiment.
FIG. 19 is a diagram illustrating an eighth example of mapping of a PRS according to the second embodiment.
FIG. 20 is a diagram illustrating a ninth example of mapping of a PRS according to the second embodiment.
FIG. 21 is a diagram illustrating a tenth example of mapping of a PRS according to the second embodiment.
FIG. 22 is a diagram illustrating an eleventh example of mapping of a PRS according to the second embodiment.
FIG. 23 is a diagram illustrating a twelfth example of mapping of a PRS according to the second embodiment.
FIG. 24 is a diagram illustrating a thirteenth example of mapping of a PRS according to the second embodiment.
FIG. 25 is a diagram illustrating an example of performing muting according to the second embodiment.
FIG. 26 is a diagram illustrating another example of performing muting according to the second embodiment.
FIG. 27 is a diagram illustrating positioning including switching of methods between LTE and NR according to a fifth embodiment.
FIG. 28 is a diagram illustrating an example of mapping of a positioning reference signal according to a sixth embodiment.
FIG. 29 is a diagram illustrating a signal waveform in one OFDM symbol that is allocated to the positioning reference signal illustrated in FIG. 28.
FIG. 30 is a diagram illustrating an example of a positioning reference signal being mapped over multiple symbols.
FIG. 31 is a diagram illustrating an example of beams being switched every section in which the same waveform appears in one OFDM symbol according to the sixth embodiment.
FIG. 32 is a diagram illustrating an example application of association of the panel numbers with the resource sets and resources in a case of use of multiple panels according to a seventh embodiment.

FIG. 33 is a diagram illustrating an example in which a UE transmits an SRS to different base stations according to the seventh embodiment.

FIG. 34 is a diagram illustrating an example of SRS being multiplexed in time domain according to an eighth embodiment.

FIG. 35 is a diagram illustrating an example mapping of an SRS multiplexed in frequency domain according to the eighth embodiment.

FIG. 36 is a diagram illustrating an example of transmission of information on the resource for an SRS from a terminal device to a base station according to the eighth embodiment.

FIG. 37 is a diagram illustrating an example of transmission of information on the resource for an SRS from a terminal device to multiple base stations according to the eighth embodiment.

Description of Embodiments

A base station, a terminal device, a positioning method, and a wireless communication system according to embodiments of the present invention will be described in detail below with reference to the drawings. Note that these embodiments are not intended to limit the scope of this invention.

First Embodiment.

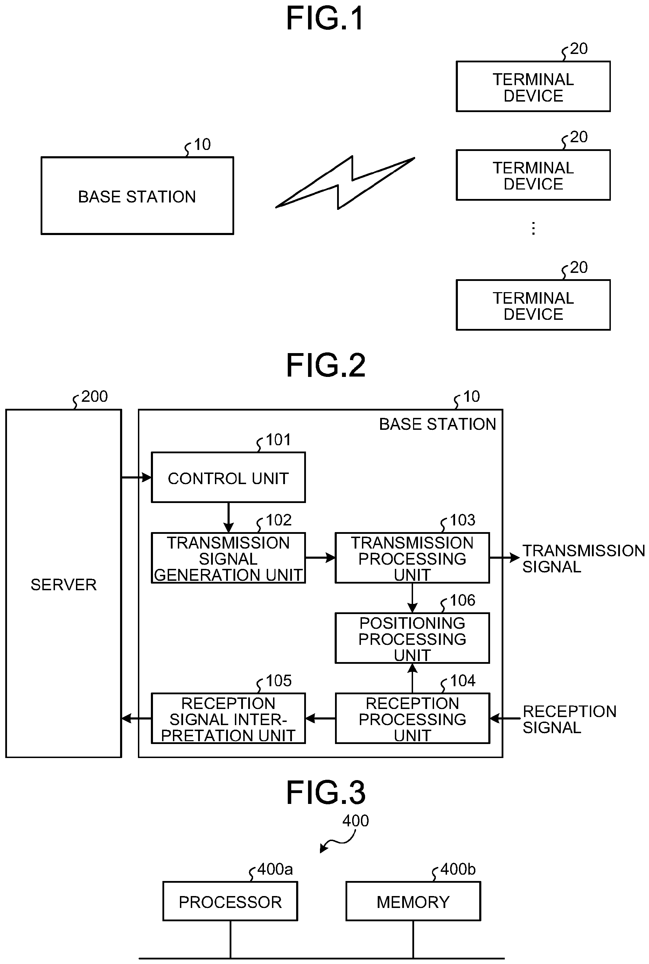

FIG. 1 is a diagram illustrating a configuration of a wireless communication system according to a first embodiment. The wireless communication system includes a base station 10 and multiple terminal devices 20. The ECID method in LTE measures a distance based on the time required for a signal transmitted between the base station 10 and one of the terminal devices 20 to be received by the receiving device or station (hereinafter, device/station). The base station 10 estimates the angle of arrival (AoA) of the signal received from the terminal device 20. In addition, the base station 10 performs positioning of a terminal device 20 based on angle and distance information. Note that the base station 10 is the transmitting device and the terminal device 20 is the receiving device in downlink communication. In addition, since a terminal device is also called user equipment (UE) in general, a terminal device 20 is also referred to as UE in the present embodiment. Note that although the positioning method of the present embodiment is called ECID method, this does not imply that the method is identical to the ECID method in LTE. This is merely a designation, and the positioning method of the present embodiment may be referred to by different terminology. Note that a base station is also referred to as gNodeB according to the 3GPP standard.

FIG. 2 is a diagram illustrating functional blocks of the base station 10 according to the first embodiment. The base station 10 includes a control unit 101, a transmission signal generation unit 102, a transmission processing unit 103, a reception processing unit 104, a reception signal interpretation unit 105, and a positioning processing unit 106. The control unit 101 receives an instruction from a server 200, and transmits a control signal to the transmission signal generation unit 102. The control signal transmitted from the control unit 101 may have a format of Radio Resource Control (RRC), Medium Access Control-Control Element (MAC-CE), or Downlink Control Information (DCI). The transmission signal generation unit 102 generates a signal that is to be transmitted to the terminal device 20, based on the control signal. The transmission processing unit 103 performs transmission processing on the signal generated by the transmission signal generation unit 102, and thus generates a transmission signal. The transmission processing unit 103 emits a beam to the terminal device 20. The transmission processing unit 103 also transmits a synchronization signal. The synchronization signal is a signal for establishing synchronization with the terminal device 20, and contains resource information indicating a resource for use in communication with the terminal device 20. The resource is associated with the beam in one-to-one correspondence. The synchronization signal includes a Synchronization Signal Block (SSB). The SSB is a signal for use in initial connection and in synchronization based on 3GPP Release 15.

The reception processing unit 104 performs reception processing on a reception signal. The reception signal interpretation unit 105 interprets the reception signal having undergone the reception processing, and transmits interpreted information to the server 200. The positioning processing unit 106 determines the location of the terminal device 20 using a resource selected by the terminal device 20. The resource information is about an SSB, and is dispersed in time domain and in frequency domain. In addition, the positioning processing unit 106 identifies the beam selected by the terminal device 20 using resource information included in a synchronization signal transmitted in response by the terminal device 20, and computes the location of the terminal device 20 using the beam. Operation of the positioning processing unit 106 will be described in detail later herein. The information transmitted from the reception signal interpretation unit 105 is a report, frequency information, or a reference signal, transmitted from the terminal device 20. A location management function (LMF) running on the server 200 instructs the base station 10 to start or terminate positioning using New Radio Positioning Protocol A (NRPPa). Note that the terminal device 20 may determine the location of the terminal device 20 by performing positioning. For example, the terminal device 20 may determine the location of the terminal device 20 by performing positioning upon call origination. This call origination may be, for example, emergency call origination. In addition, the location information on the terminal device 20 obtained by the positioning may be notified to the called party by means of the foregoing call origination. This notification may be performed in a case in which, for example, the call origination is emergency call origination. This enables, for example, the called party to promptly obtain the location information on the terminal device of the caller. In a case in which the terminal device 20 performs positioning, the terminal device 20 may or may not inform the base station 10 of starting of the positioning. The base station 10 may inform the LMF of starting of the positioning of the terminal device 20. The notification to the LMF from the base station 10 may be provided using or without using the notification provided from the terminal device 20 to the base station 10.

The control unit 101, the transmission signal generation unit 102, the transmission processing unit 103, the reception processing unit 104, the reception signal interpretation unit 105, and the positioning processing unit 106 are implemented in processing circuitry, which is an electronic circuit that performs the functionality thereof.

This processing circuitry may be a dedicated hardware element, or may be a control circuit including a memory and a central processing unit (CPU) that executes a program stored in the memory. In this regard, the memory is, for example, a non-volatile or volatile semiconductor memory such as a random access memory (RAM), a read-only memory (ROM), or a flash memory; a magnetic disk, an optical disk, or the like. FIG. 3 is a diagram illustrating a control circuit according to the first embodiment. In a case in which this processing circuitry is a control circuit including a CPU, this control circuit is, for example, a control circuit 400 in the configuration illustrated in FIG. 3.

As illustrated in FIG. 3, the control circuit 400 includes a processor 400a, which is the CPU, and a memory 400b. In a case of implementation in the control circuit 400 illustrated in FIG. 3, the functionality is implemented by reading and executing, by the processor 400a, a program corresponding to each functionality stored in the memory 400b. The memory 400b is also used as a temporary memory in each functionality performed by the processor 400a.

The base station 10 is capable of extracting angle information using transmit and receive beams upon estimation of a receiving angle. The transmit and receive beams have a two-dimensional configuration, but may have a three-dimensional configuration. The base station 10 is also capable of extracting three-dimensional angle information. When the base station 10 extracts angle information using transmit and receive beams, the base station 10 receives information on suitable beam information from the terminal device 20 during positioning, and obtains AoA information through conversion based on the beam information.

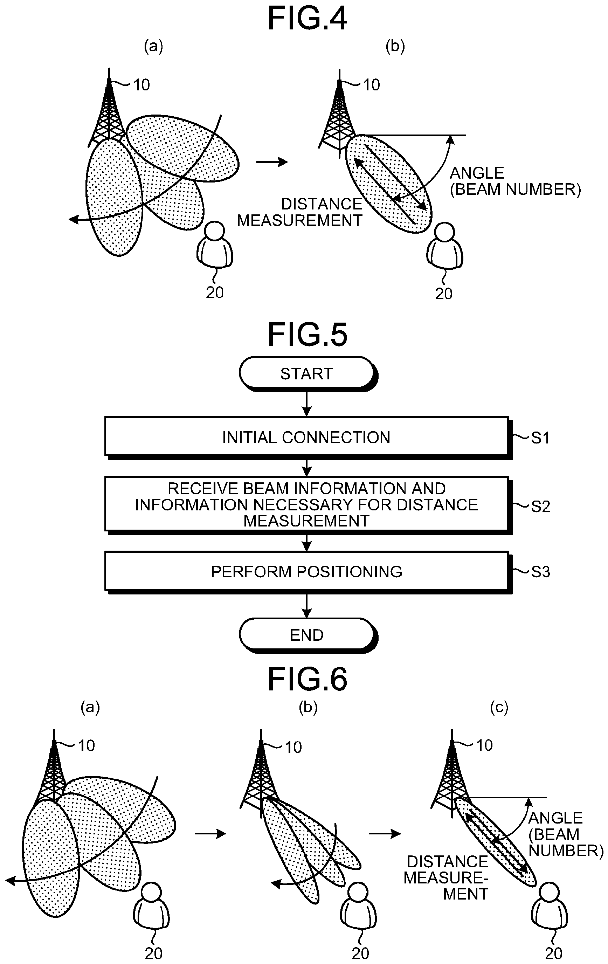

FIG. 4 is a diagram illustrating an example of positioning performed by the base station 10 according to the first embodiment. In FIG. 4(a), the base station 10 finds the terminal device 20 using a beam. In FIG. 4(b), the base station 10 measures the distance and the angle between the base station 10 and the terminal device 20 after finding the terminal device 20. As illustrated in FIG. 4(a), the base station 10 searches for the terminal device 20 by sweeping using beams over a wide range in the initial connection process. This results in lower precision of obtainable angle information than when sweep is performed within a narrow range. Nevertheless, when the base station 10 needs fast determination of angle information on the terminal device 20, the base station 10 may perform positioning of the terminal device 20 using the angle information obtained in the initial connection process. Note that the beam may be selected based on, instead of the received power, block error rate (BLER) prediction information or the like. In addition, the terminal device 20 may report, to the base station 10, the identification number of the SSB corresponding to the beam having a highest received power level among identification numbers of multiple SSBs transmitted from the base station 10 during initial synchronization. Note that since the base station 10 transmits one SSB for one beam, a beam and an SSB are associated with each other in one-to-one correspondence. That is, once the identification number of the SSB is known to the base station 10, the base station 10 can identify which beam has been selected by the terminal device 20.

The SSB and the beam can be identified in various manners, and the terminal device 20 can report the identification information to the base station 10 using various techniques relating to SSB. One example of reporting is that the terminal device 20 and the base station 10 transmit frequency information or a reference signal in time domain and in frequency domain. An aggregation of resource elements (REs) dispersed in time domain and in frequency domain is referred to as resource. For example, in LTE, one resource block is formed of 12 subcarriers in the frequency direction as described in Non-Patent Literature 2. The present embodiment will be described by reading the term subcarrier as RE. The base station 10 stores information indicating the resource in the SSB, and then transmits the SSB. The terminal device 20 responds to the base station 10 using the resource specified in the SSB. This enables the base station 10 to know the SSB corresponding to the resource that has been used by the terminal device 20 for response. In addition, knowing to which SSB the response corresponds enables the base station 10 to identify which beam has been selected by the terminal device 20. In a case in which the terminal device 20 selects only one beam, the terminal device 20 responds using a resource mapped to a single time and to a single frequency. Specifically, examples of the identification number of an SSB include an SS Block Resource Indicator (SSBRI). An SSBRI is an index for specifying a predetermined position, indicating which symbol(s) and RE(s) are to be used to transmit the SSB in frequency domain and in time domain. In short, a different SSBRI means a different beam to be used for transmission of the SSB corresponding to that SSBRI. Note that in a case of positioning using a beam, use of a beam in a frequency band called FR2 is useful, where FR2 ranges from around 24 GHz to around 52 GHz, and allows a relatively narrower beam to be formed than at lower frequencies. By performing positioning using a beam, angle information can be accurately obtained in a short time, thereby enabling low-delay positioning to be provided.

The association of a beam with a resource for use in the response by the terminal device 20 may be set by the server 200. In 3GPP, the response from the terminal device 20 to the base station 10 is designated Msg. 1. In addition, an access grant message from the base station 10 for Msg. 1 is designated Msg. 2. Information transmitted in Msg. 1 is referred to as Physical Random Access Channel (PRACH). Note that Msg. 3 and Msg. 4 may also be introduced to allow the terminal device 20 to transmit a request for RRC connection using Msg. 3, and the base station 10 to transmit setting information on RRC connection using Msg. 4. In addition, the uplink beam for Msg. 3 may be the beam used for transmission of Msg. 1, or may be another beam. The waveform of the transmission signal and the resource for the transmission signal for use in transmission of Msg. 3 are specified by the base station 10 for the terminal device 20. That is, the base station 10 may perform positioning after processing of Msg. 1.

FIG. 5 is a flowchart illustrating a procedure of positioning according to the first embodiment. The base station 10 establishes an initial connection with the terminal device 20 (step S1). The base station 10 receives beam information and information necessary for distance measurement (step S2). The base station 10 performs positioning of the terminal device 20 using the beam information and the information necessary for distance measurement (step S3). Note that the present embodiment assumes that the location of the base station 10 is known, and identifying the beam selected by the terminal device 20 therefore allows the base station 10 to know the direction of the location of the terminal device 20. Note that the base station 10 may estimate the distance by measuring the time required for a round trip using a technique such as a Timing Advance (TA) method or using a PRACH thereby to determine the distance.

FIG. 6 is a diagram illustrating another example of positioning performed by the base station 10 according to the first embodiment. FIG. 6(a) illustrates a coarse search. FIG. 6(b) illustrates a fine search. FIG. 6(c) illustrates a positioning after a fine search. The base station 10 may perform positioning after a fine search such as one illustrated in FIG. 6(b).

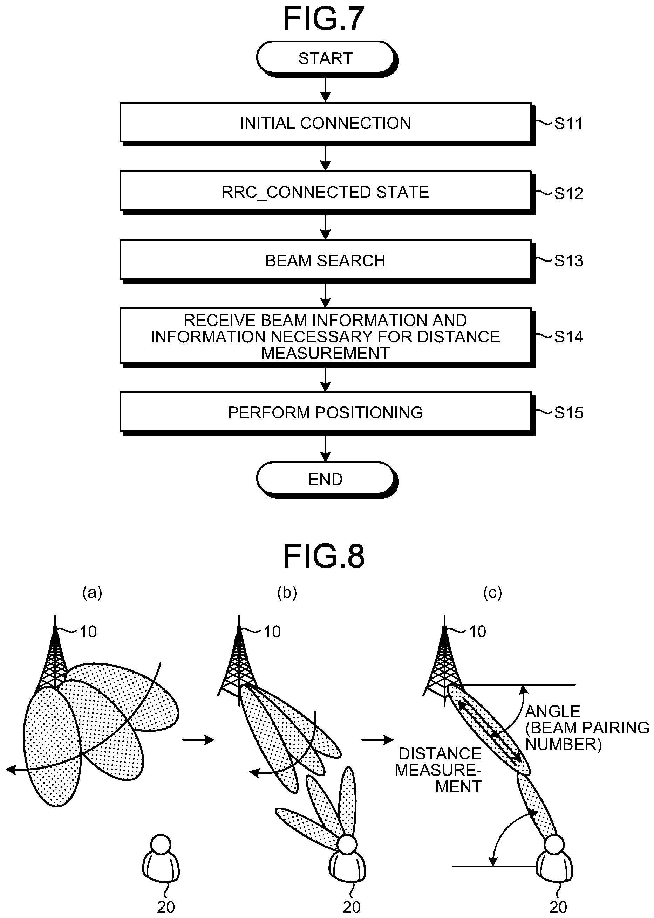

FIG. 7 is another flowchart illustrating a procedure of positioning according to the first embodiment. The base station 10 establishes an initial connection with the terminal device 20 for synchronization (step S11). Upon completion of establishment of the initial connection, the state transitions to an RRC_CONNECTED state, i.e., a connected state (step S12). The base station 10 performs beam management using an SSB or a Channel State Information-Reference Signal (CSI-RS), which is a reference signal, to reduce the spacing between beams to increase the resolution as compared to the resolution in the initial connection process. The base station 10 then performs a beam search in the direction of the terminal device 20 (step S13). After the initial connection establishment or the beam management process, the base station 10 transmits the CSI-RS or the SSB to the terminal device 20 on downlink. In addition, the base station 10 receives beam information and information necessary for distance measurement fed back from the terminal device 20 (step S14). Moreover, the base station 10 selects a beam ID using these pieces of information, and uses the fed-back information as angle information. The terminal device 20 transmits a Sounding Reference Signal (SRS) to the base station 10. The base station 10 measures the time required for a round trip of a pair of the SBB and the SRS to determine the distance, and performs positioning (step S15). Note that when a limited amount of time is allowed for positioning by the base station 10, positioning may be performed using the coarse search used in beam selection.

In the case in which the base station 10 performs a beam search using a CSI-RS, the terminal device 20 may report the port number used for the CSI-RS having the highest power level among the received CSI-RSs. The present embodiment will be described using, as an example, a non-zero powered CSI-RS (NZP-CSI-RS) defined in Non-Patent Literature 2 and the like. A port number is a number for identifying the service used for communication by the base station 10 and by the terminal device 20. A port number is associated with the position allocated to the CSI-RS in frequency domain and in time domain, and in a case of code multiplexing, with the code type. Thus, identifying the port number allows the terminal device 20 to know the position of the CSI-RS and the code applied to the CSI-RS. Note that, in this example, association between a CSI-RS port and a transmission beam in one-to-one correspondence enables the base station 10 to know which beam has been selected based on the port number reported. In addition, the terminal device 20 may report a CSI-RS Reference Indicator (CRI) to the base station 10 rather than a CSI-RS port. In short, a different CRI means a different beam that transmits the CSI-RS corresponding to the CRI. Identifying the reported CRI allows the base station 10 to know which beam has been selected by the terminal device 20, among the beams emitted from the base station 10.

FIG. 8 is a diagram illustrating an example of positioning performed by the base station 10 and by the terminal device 20 according to the first embodiment. FIG. 8(a) illustrates a coarse search being performed by the base station 10. FIG. 8(b) illustrates a fine search being performed by the base station 10. The terminal device 20 is also performing a search. In FIG. 8(c), the base station 10 computes the angle and the distance of the terminal device 20 using a beam from the terminal device 20. As illustrated in FIG. 8(c), the angle information may be a beam pair link (BPL), which is the beam number of the beam from the base station 10 or a combination of the beam number of the beam from the base station 10 and the beam number of the beam from the terminal device 20. The BPL is used to remember which beam combination is the optimum. When a communication is interrupted and is then to be re-established, use of the stored BPL enables a transmission- and-reception pair to be re-established without performing another beam sweeping by the transmitting device/station and by the receiving device/station. In addition, performing positioning such that the base station 10 and the terminal device 20 each use an optimum beam allows high-precision positioning to be performed. Note that although the foregoing example has been described in the context of a criterion that the terminal device 20 selects the beam having a high received power level, a characterization value such as a BLER obtained from the received signal may also be used.

The base station 10 is capable of performing beam management using an SRS transmitted on uplink. In this case, the base station 10 observes the SRS transmitted from the terminal device 20, selects a suitable uplink beam, and generates a BPL using the information on the CSI-RS and on the SRS. By obtaining the information on the SRS and on the CSI-RS, higher-precision angle information can be obtained. In addition, in a case of performing digital precoding, the terminal device 20 selects a suitable codebook index. Codebooks are defined in 3GPP TS38.214 as described in Non-Patent Literature 1. Processing in an upper-layer protocol extracts the angle information using the SSB identification number, the CSI-RS port number or beam ID number, or the codebook index, reported by the terminal device 20. A CRI may be used as the beam ID number for the CSI-RS, and an SRS Resource Indicator (SRI) may be used as the beam ID number for the SRS. Similarly to a CRI, an SRI is associated with the position allocated to the SRS in frequency domain and in time domain, and with the beam.

In NR, a reference signal received power (RSRP), a reference signal received quality (RSRQ), a reference signal strength indicator (RSSI), or a rank indicator (RI) is used as information necessary to be reported, and the base station 10 may estimate the distance using such information. In this case, the base station 10 transmits an RSRP, an RSRQ, or an RSSI toward the LMF. For example, use of RSRP allows the amount of reduction in the received power to be identified, thereby enabling the RSRP to be used in distance measurement. An RSRQ or RI is used to determine whether a signal received by the terminal device 20 is suitable for positioning. For example, a high RI value indicates a high proportion of reflected waves, indicating unsuitability for positioning.

In the present embodiment, the distance between the base station 10 and the terminal device 20 is determined based on transmission times required in uplink and in downlink. A downlink signal used for distance measurement can be an SSB, a CS-RS, or the like. In the uplink direction, a PRACH, an SRS, or a Demodulation Reference Signal (DMRS) may be used. Note that in the case of an SRS, the process flow is specified by RRC. In addition, in the present embodiment, an RRC parameter "usage" of the SRS may be set to "positioning" or the like to expressly indicate the usage for positioning. By informing the terminal device 20 by the base station 10 that the SRS is intended for positioning, the terminal device 20 can perform a suitable process, such as assignment of high priority to positioning processing. Alternatively, a parameter name expressly indicating a positioning purpose such as CSI-RS-Resource-Positioning may also be introduced.

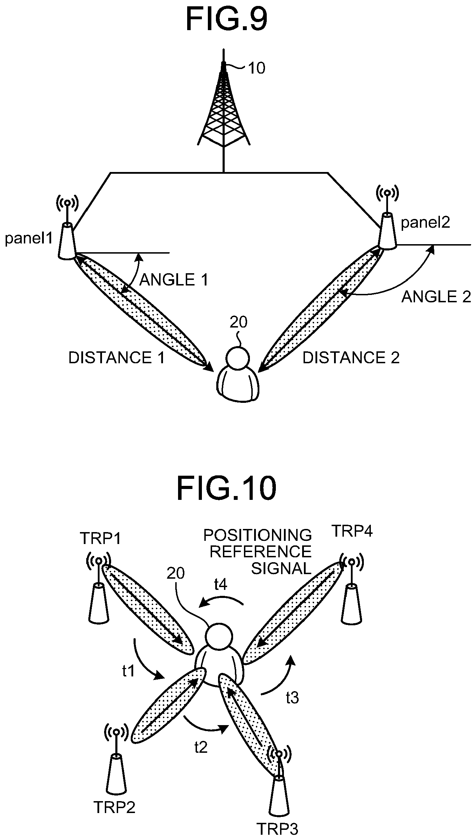

In addition, positioning may be performed using multiple transmission-reception points (TRPs) or panels. A panel is an antenna including multiple antenna elements. A base station may perform communication using multiple panels. Panels may be physically separated from one another. In addition, in a case in which an obstacle exists in front of a panel, some of the panels may be powered down to provide a configuration not to use those panels. In this case, multiple estimated values may be used for the angle of arrival and for the distance to obtain average values thereof to perform positioning. Alternatively, a candidate value other than the maximum value and other than the minimum value may be used to perform positioning. FIG. 9 is a diagram illustrating positioning using two TRPs according to the first embodiment. In FIG. 9, the base station 10 performs positioning using two TRPs. In this case, since two sets of angle information and distance information are obtained, the base station 10 performs positioning using the two sets of information. In addition, as illustrated in the example illustrated in FIG. 9, in a case of positioning using multiple TRPs, the terminal device 20 transmits as many PRACHs as the number of beams received. In this case, a combination of the angle information and the distance information is obtained on a per-panel or per-TRP basis. Accordingly, an identification number such as TRP ID number may be assigned to each combination, and be reported to the positioning processing unit 106.

Note that a node (NG_RAN_NODE) connected to a 5G core network transmits information necessary for positioning computation for the LMF. Examples of the information necessary for positioning computation include the carrier frequency, the used bandwidth, the number of antenna ports to be used, beam information or a beam pair index of the base station 10 or of the terminal device 20, and information on the selected codebook. In addition, these types of information may include the slot frame number (SFN), the location of the antenna and of the panel, and a value indicating the subcarrier spacing used. In NR, a subcarrier spacing of 15 kHz, 30 kHz, 60 kHz, 120 kHz, or 480 kHz is selectable. In addition, information such as RSRQ or RSRP may also be transmitted. Furthermore, regarding the use of OFDM or DFT-s-OFDM in uplink, information about the applied CP length and bandwidth part (BWP) may be transmitted from the NG_RAN_NODE to the LMF.

As described above, in the present embodiment, the base station 10 transmits a synchronization signal or a reference signal that contains resource information indicating a resource associated with a beam in one-to-one correspondence, and computes the location of the terminal device 20 using the resource information. This enables the base station 10, even in a multipath environment, to identify the beam selected by the terminal device 20 by referring to the resource information included in one of multiple signals caused by multipath. This, in turn, enables the base station 10 to compute the location using the beam selected by the terminal device 20. Thus, use of the beam improves directivity, and even in a multipath environment, reduction in the number of reflected waves removes the effect of reflection on the receiving device/station. This permits only the main signal to be received. Although there are multiple angles of arrival in an environment subject to reflected waves, use of a transmission method that permits reception of only the main signal increases accuracy of selection of the optimum beam in the receiving device/station. In addition, reception of a reflected wave during computation of a round-trip time in distance measurement would reduce the accuracy of computation of the main signal round-trip time. Thus, the accuracy of computation of the location of the terminal device 20 can be prevented from decreasing even in a multipath environment.

Second Embodiment.

FIG. 10 is a diagram illustrating positioning using an OTDOA method according to a second embodiment. As illustrated in FIG. 10, multiple base station 10 each transmit a positioning reference signal to the terminal device 20 for performing positioning. The present embodiment illustrated in FIG. 10 assumes, by way of example, that the TRPs are the base stations 10, and that a unique cell identification (ID) has been assigned to each of the TRPs. Note that it is assumed that the base stations 10 are in synchronism with one another when this approach is used. The terminal device 20 receives reference signals, and performs positioning based on a difference in the reception times of the respective reference signals. Positioning using an OTDOA method is described in detail in Non-Patent Literature 4. In FIG. 10, t1 represents the difference between the reception time of a slot including the PRS transmitted from TRP1 and the reception time of a slot including the PRS transmitted from TRP2; t2 represents the difference between the reception time of a slot including the PRS transmitted from TRP2 and the reception time of a slot including the PRS transmitted from TRP3; t3 represents the difference between the reception time of the PRS transmitted from TRP3 and the reception time of the PRS transmitted from TRP4; and t4 represents the difference between the reception time of the PRS transmitted from TRP4 and the reception time of the PRS transmitted from TRP1. Note that a slot is a unit formed of 14 OFDM symbols in downlink communication, and a slot is formed of 14 OFDM symbols or DFT-s-OFDM symbols in uplink communication. In addition, although a slot including the PRS is used as an example, the PRS may be included in a unit shorter than a slot, e.g., a non-slot formed of two, four, or seven symbols, and a difference between the reception times of respective non-slots may also be used. Note that a reception time difference is referred to as Reference Signal Time Difference (RSTD). In addition, a PRS may also be referred to as NR PRS.

Note that a positioning-purpose reference signal may be transmitted after completion of beam sweeping and determination of the beam for the terminal device 20. That is, a PRS is transmitted in Msg. 4 or after transmission of Msg. 4 described above. This is because when a positioning-purpose signal is transmitted after completion of beam sweeping, the location of the terminal device 20 can be determined, and the electrical power for transmitting the positioning reference signal can thus be concentrated on the beam for the terminal device 20.

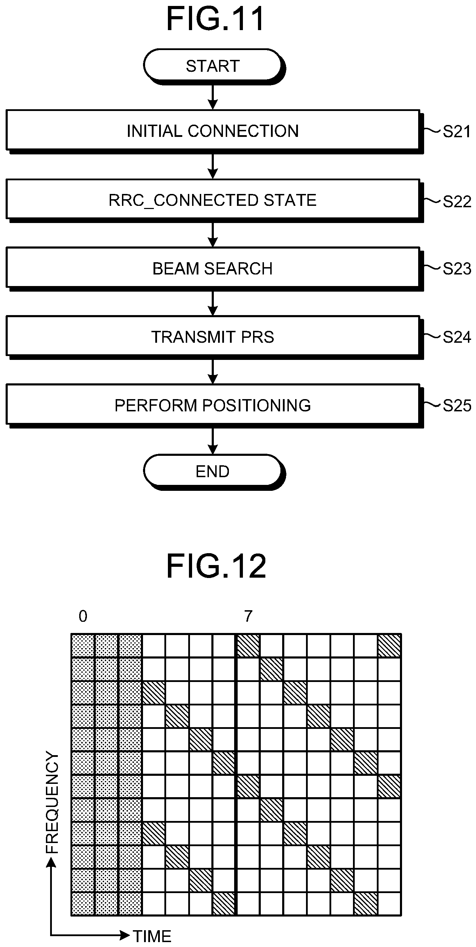

FIG. 11 is a flowchart illustrating a procedure of positioning in the OTDOA method according to the second embodiment. The process from step S21 to step S23 is the same process as the process from step S11 to step S13. The base stations 10 each transmit a PRS to the terminal device 20 (step S24). The process of step S25 is the same process as the process of step S15. Note that the OTDOA method may be performed such that the base stations 10 are synchronized with the terminal device 20, and the positioning reference signal is transmitted in the RRC_CONNECTED state defined in 3GPP.

The positioning reference signals need to be orthogonal to one another in frequency domain and in time domain. In LTE, a positioning-purpose reference signal is mapped to avoid being co-located with a CRS. In contrast, no CRS is mapped in NR, which is a standard for 5G, thereby enabling efficient mapping to be provided unlike LTE. FIG. 12 is a diagram illustrating a first example of mapping of a PRS according to the second embodiment. The diagrams of mapping of RRS illustrated in the examples in this embodiment each illustrate a mapping of PRS in which one resource block (RB) is formed of 12 REs and 14 OFDM symbols. The scheduler included in each of the base stations 10 assigns multiple consecutive or discrete RBs for the terminal device 20 for communication. In this regard, a unit time formed of 14 OFDM symbols is defined as one slot.

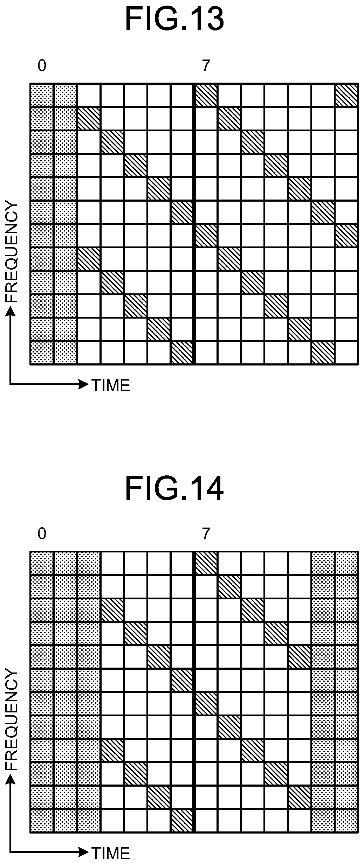

FIG. 12 is a PRS mapping diagram having a vertical axis representing the frequency and a horizontal axis representing the time. In FIG. 12, a downward diagonally striped tile is a tile representing a position for a PRS. In addition, a dotted tile is a tile where no PRS is allowed to be mapped. In the present embodiment, a plain tile represents an idle RE allocated to no data information or no control information. That is, in the present embodiment, a PRS and data (Physical Downlink Shared Channel (PDSCH)) are not multiplexed. No allocation to data information and to control information (Physical Downlink Control Channel (PDCCH)) can prevent interference from data and a control signal transmitted from another TRP or base station 10 during positioning. In addition, a dotted tile may be used to allocate downlink control information such as a PDCCH, and therefore, no PRS is mapped to a dotted tile. Moreover, a PRS is not mapped either to a position allocated to a Physical Broadcast Channel (PBCH), a Primary Synchronization Signal (PSS), or a Secondary Synchronization Signal (SSS). The 3GPP Rel. 15 standard describes that a PDCCH is mapped to first one, two, or three symbols of a slot. Accordingly, the first symbol to be allocated to a PRS may be determined based on the number of PDCCH symbols. Since the maximum number of PDCCH symbols is three, the position of the first symbol allocated to a PRS in a slot may be constantly fixed to a symbol index of 3 as illustrated in FIG. 12. FIG. 13 is a diagram illustrating a second example of mapping of a PRS according to the second embodiment. In a case in which a PDCCH is mapped to two symbols, the mapping will be as illustrated in FIG. 13.

FIG. 14 is a diagram illustrating a third example of mapping of a PRS according to the second embodiment. In FIG. 14, no PRS is mapped to the last two symbols in addition to the first three symbols. In 5G, uplink transmission and downlink transmission are time multiplexed. Thus, for uplink reception or for reception of the next uplink slot, last multiple symbols in a downlink transmission slot may be reserved and made unusable as a preparation period for an analog device. Therefore, an end portion of a PRS may be set not to be transmitted. In FIG. 14, the last two symbols are used for uplink communication, and no PRS is therefore transmitted. In addition, in consideration of variation in symbols used for transmission of uplink or downlink control information, multiple PRS mappings may be prepared to allow selection by an upper layer.

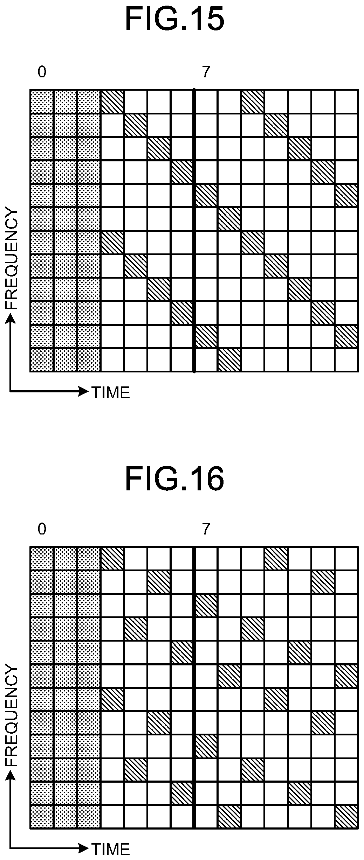

FIG. 15 is a diagram illustrating a fourth example of mapping of a PRS according to the second embodiment. A PRS may be cyclically shifted in an orthogonal manner in frequency domain. In a case in which multiple base stations 10 each transmit a PRS, the terminal device 20 receives multiple PRSs. It is thus important that the PRSs be orthogonal to one another in frequency domain to avoid mutual interference. Therefore, a PRS may be cyclically shifted in frequency domain as illustrated in FIG. 15. In addition, a different amount of cyclic shift may be set for each base station 10 to cause PRSs transmitted from respective TRPs to be orthogonal to one another in frequency domain. For example, in the example of FIG. 10, the mapping of a PRS transmitted from TRP1 may be set to the default mapping illustrated in FIG. 12; the mapping of a PRS transmitted from TRP2 may be set to a mapping obtained by cyclically shifting by one RE the PRS mapping illustrated in FIG. 12; the mapping of a PRS transmitted from TRP2 may be set to a mapping obtained by cyclically shifting by two REs the PRS mapping illustrated in FIG. 12, i.e., the PRS mapping illustrated in FIG. 15; and the mapping of a PRS transmitted from TRP3 may be set to a mapping obtained by cyclically shifting by three REs the PRS mapping illustrated in FIG. 12. The amount of shift of REs may be set based on the PRS identification number set by an upper layer, that is, PRS_ID, which is an ID value. For example, a value such as NPRSIDmod6 may be used for setting.

Note that the PRS mapping of FIG. 12 is a mapping in which the RE positions in respective OFDM symbols next to each other are cyclically shifted by one RE. Such mapping facilitates positioning in a flat frequency characteristic.

FIG. 16 is a diagram illustrating a fifth example of mapping of a PRS according to the second embodiment. As illustrated by the PRS pattern illustrated in FIG. 16, a PRS may be mapped, in OFDM symbols next to each other, to positions cyclically apart from each other by two or more REs. Use of such mapping enables robust PRS transmission even along a transmission channel having frequency selectivity. Note that multiple RE-shifted patterns such as ones illustrated in FIG. 12 or 16 may be prepared to allow an upper layer such as Radio Resource Control (RRC) to select one of the RE-shifted patterns, and to inform the terminal device 20 of the selection result. Such usage enables a PRS to be selected that is suitable for each one of various transmission channels.

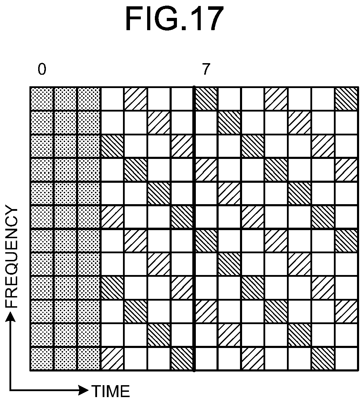

FIG. 17 is a diagram illustrating a sixth example of mapping of a PRS according to the second embodiment. As illustrated in FIG. 17, one of the base stations 10 may transmit two or more patterns of PRSs. An upward diagonally striped tile is a tile representing a position for a second pattern of PRS. Designating one pattern as one resource, the base station 10 transmits two patterns of PRSs. Such configuration enables high-precision positioning to be performed using a greater number of PRSs. In addition, in a case of use of multiple panels in positioning, this enables a different PRS pattern to be set for a different panel. Note that due to increased precision of positioning in a line-of-sight environment when positioning is performed at a high frequency around 30 GHz, the terminal device 20 may inform each TRP of being in a line-of-sight environment.

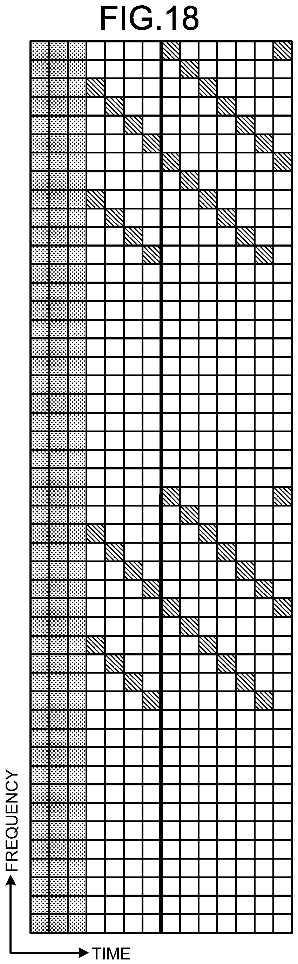

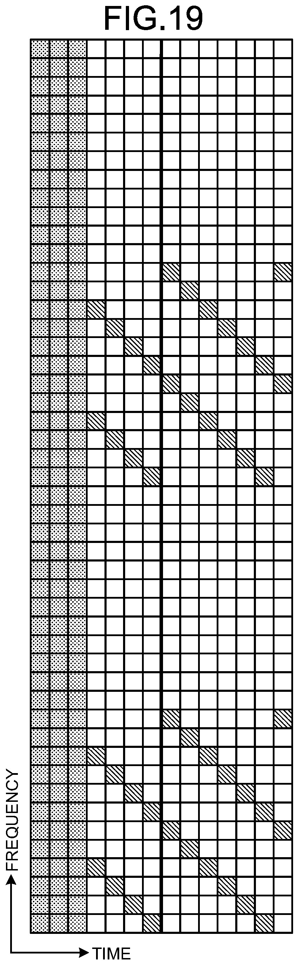

FIG. 18 is a diagram illustrating a seventh example of mapping of a PRS according to the second embodiment. FIG. 19 is a diagram illustrating an eighth example of mapping of a PRS according to the second embodiment. As illustrated in FIGS. 18 and 19, the orthogonal property may be maintained on a per-RB basis in the PRS mapping. Providing orthogonal property on a per-RB basis can increase the number of PRSs orthogonal to one another in frequency domain.

Note that similarly to LTE, in which a different number of ports used for PBCH results in a different PRS, a different PRS configuration may be used depending on the number of ports used for PBCH also in the present embodiment. Note also that, as described in Non-Patent Literature 2, 3GPP TS36.211 provides that PBCH is set only in one port. In addition, LTE is specified such that only one density is set for the number of ports for PBCH. In contrast, in the present embodiment, different levels of positioning precision may be demanded between a high frequency band referred to as FR2 in NR and a low frequency band referred to as FR1 in a range from 450 MHz to 6 GHz. Moreover, due to a limitation in frequency, in time, or in power resources of the transmitting device/station, the PRS density needs to be changed. Thus, multiple densities may be predetermined to allow an upper layer such as RRC to set the density. The density may be set by specifying a selection index by a bit sequence or by using a parameter that specifies a mode. For example, the selection index can indicate such that 0=standard, 1=low density, and 2=high density. In addition, the mode may be indicated by introducing a parameter representing the PRS density such as PRS_DENSITY, which specifies as PRS_DENSITY="DEFAULT", "HIGH", or "LOW". Alternatively, the density may also be specified such that mode indices are defined, PRSs having multiple respective densities are introduced, the densities corresponding to the respective mode indices are predetermined in a specification, and the density is then notified to the terminal device by RRC. Note that setting a high PRS density enables high-precision positioning to be performed in a short time, and low-delay positioning to be thus provided.

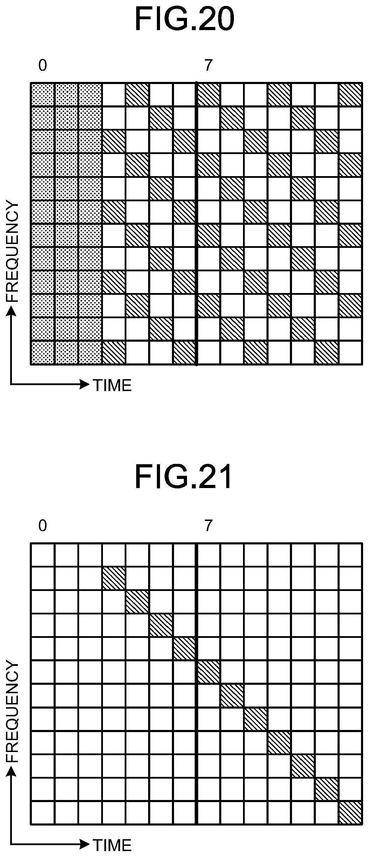

FIG. 20 is a diagram illustrating a ninth example of mapping of a PRS according to the second embodiment. FIG. 20 illustrates an example PRS mapping having a different PRS density. The PRS mapping diagram of FIG. 20 allows a PRS to be mapped with a higher density than the density in the mapping of FIG. 12. In addition, the mapping of FIG. 20 trades off the orthogonal property in frequency domain against a high density of PRS mapping.

FIG. 21 is a diagram illustrating a tenth example of mapping of a PRS according to the second embodiment. FIG. 21 illustrates an example mapping having a low PRS density. In FIG. 21, a lower PRS density than the density in the mapping of PRS of FIG. 12 is traded off for the orthogonal property in frequency domain. Note that a PRS may be mapped to part or all of active BWPs. Note also that in a case in which only a part of BWPs is used in the assigned bandwidth, it is appropriate to use a BWP or BWPs near a center portion of the assigned bandwidth, close to the center frequency, meaning a lower probability of suffering from interference from a neighboring bandwidth. For example, in a case in which a bandwidth is divided into quarters, i.e., BWP1, BWP2, BWP3, and BWP4 in ascending order of frequency, use of BWP2 or BWP3 or both BWP2 and BWP3 can provide accurate positioning. In addition, in a case of use of multiple BWPs, measurement in each BWP may be observed during a measurement gap. No channel or signal is transmitted from each of the TRPs or panels during a measurement gap, which is a time period for the terminal device to make an observation. Only one BWP is used during a measurement gap, and a PRS is mapped within that BWP. For example, assuming t2>t1 in a certain time period, only the PRS included in BWP1 is transmitted during the measurement gap from t1 to t2. In addition, assuming t4>t3>t2>t1, only the PRS included in BWP2 is transmitted in a BWP in the time period from t3 to t4. Note that when the used bandwidth is high, and transmission-reception processing is performed utilizing the entire bandwidth, the bandwidth is divided using BWPs to prevent interference to other users and unavailability of bandwidth to other users thus to improve frequency use efficiency and to minimize interference to other users. Note also that the setting of the measurement gap is notified to the terminal device 20 using RRC or the like. In addition, the base stations may be synchronized with one another using the measurement gap to synchronize timing of transmission of a reference signal used for positioning. Moreover, owing to the use of a broadband for communication or positioning in NR, an RSTD may be computed in a case in which the TRPs use different center frequencies or use the same center frequency but different BWPs or different bandwidths. Note that the RSTD is generally observed using Equation (1) below. Note also that in Equation (1) below, RSTDi,1 represents a time difference between the time related to TRPi, which is an i-th TRP, and the time related to TRP1, which is the TRP for reference. The value Ti-T1 represents the difference between times when TRPi and TRP1 transmit respective slots each including a PRS. The value Ti-T1 is referred to as Transmit Time Offset. Synchronized TRPs provide no offset therebetween, meaning that the offset has a zero value. The parameter ni is a measurement error in the time of arrival in the terminal device. The speed of light is c. The location of the terminal device is represented by coordinates (xt, yt), and the location of the TRPi is represented by (xi, yi). In a case in which positioning is performed by the terminal device, location information on the base station, Transmit Time Offset, and/or the like may be contained in a System Information Block, a PDCCH, a PDSCH, or the like. Note that since the terminal device 20 is capable of computing the RSTD as described above, a positioning function may be provided in the terminal device 20. Moreover, the terminal device 20 may transmit information necessary for positioning to the base station 10 to allow the base station 10 to perform positioning. In this case, the terminal device 20 includes a transmission processing unit, a positioning processing unit, and a reception processing unit respectively corresponding to the transmission processing unit 103, the positioning processing unit 106, and the reception processing unit 104 of the base station 10. In this case, the reception processing unit of the terminal device 20 receives a signal for use in positioning transmitted from the base station 10, and the positioning processing unit of the terminal device 20 computes the location of the terminal device 20 using the signal for use in positioning. An example of the signal for use in positioning is a PRS. In addition, although Equation (1) has been described in the context of TRPs, Equation (1) is also applicable to a transmitting device capable of transmitting a PRS in addition to TRPs, and is a mathematical formula applicable to positioning using a panel.

[Formula 1]

$$RSTD_{i,1} = \frac{1}{c}\sqrt{(x_t - x_i)^2 + (y_t - y_i)^2} + \frac{1}{c}\sqrt{(x_t - x_1)^2 + (y_t - y_1)^2} + (T_i - T_1) + (n_i - n_1) \quad \cdots (1)$$

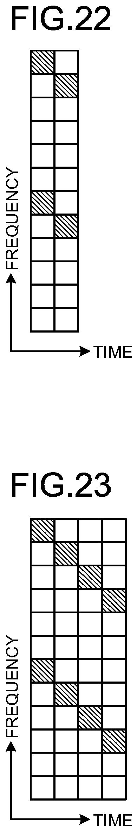

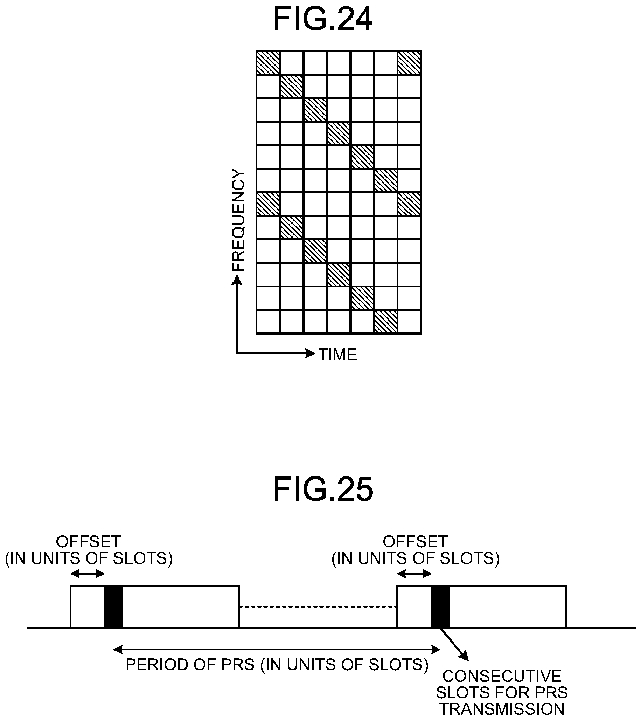

In addition, a PRS can be designed for a short slot called non-slot, formed of two symbols, four symbols, or seven symbols. FIG. 22 is a diagram illustrating an eleventh example of mapping of a PRS according to the second embodiment. FIG. 22 is a diagram illustrating an example PRS mapping of a slot formed of two symbols. FIG. 23 is a diagram illustrating a twelfth example of mapping of a PRS according to the second embodiment. FIG. 23 is a diagram illustrating an example PRS mapping of a slot formed of four symbols. FIG. 24 is a diagram illustrating a thirteenth example of mapping of a PRS according to the second embodiment. FIG. 24 is a diagram illustrating an example PRS mapping of a slot formed of seven symbols. The examples illustrated in FIGS. 12 through 24 have been described in the context of examples in which REs allocated to a PRS are distributed diagonally right down on the plane in the time-frequency coordinate system, that is, a later symbol uses a lower frequency subcarrier. However, these REs may be distributed diagonally right up on the plane in the time-frequency coordinate system, that is, a later symbol may use a higher frequency subcarrier. Moreover, a PRS, another reference signal or a channel, and a power difference may be set by an upper layer such as RRC to reduce interference caused by the PRS. Alternatively, a PRS may be set to have a power level higher than power levels of the other signals to make the PRS less susceptible to interference than the other signals. The power difference may be compared with the power of a DMRS, of a CSI-RS, or of a Phase Tracking Reference Signal (PTRS). Alternatively, a difference from the power of a PDSCH may also be used.

The sequence used for a PRS may be generated by a random number generator configured based on a seed number. The seed for the random number generator described above may then be set by an upper layer using RRC or the like such that a different seed will be assigned to a different TRP. The random number generator may be, for example, a pseudo-random number generatotor using pseudo-random number generatotion such as one described in section 5.2 of Non-Patent Literature 2.

A PRS is generated based on Quadrature Phase Shift Keying (QPSK). A QPSK sequence used for a PRS may be generated by a random number generator configured based on a seed number. The seed for the random number generator described above may then be set by an upper layer using RRC or the like such that a different seed will be assigned to a different TRP or panel. This random number generator may be, for example, a pseudo-random number generatotor that uses pseudo-random number generatoion such as one described in Non-Patent Literature 2. A shift register of a pseudo-random number generator defined in 3GPP is set by a parameter cinit. The parameter cinit depends on the position of the symbol or the number of the slot allocated to the PRS. In addition, the PRS may be generated based on PRS_ID that is set by an upper layer. The PRS_ID can be changed as desired, and may be set by an upper layer to allow a different PRS to be used for a different cell, TRP, or panel. The PRS_ID may have a value of, for example, 2^16, which is equivalent to the upper limit of cell ID. For example, in NR, this is 2^10=1024 (the number of cell_IDs is 1008). In a case in which the PRS_ID has a value in a range of {0, ..., 1023}, the initial value for the shift register for sequence generation may be generated using Equation (2) below. Note that a PRS may be a sequence other than a QPSK sequence, such as a Zadoff Chu sequence. In this case, the sequence number of that Zadoff Chu sequence is generated by the pseudo-random number generator.

[Formula 2]

$$C_{init} = 2^{28} \left\lfloor \frac{N_{ID}^{PRS}}{1024} \right\rfloor + 2^{10} (7 \cdot (n_s + 1) + 1 + 1) \cdot \left( 2 \cdot \left( N_{ID}^{PRS} \bmod 1024 \right) + 1 \right) + 2 \cdot \left( N_{ID}^{PRS} \bmod 1024 \right) + N_{CP}$$

$$\cdots (2)$$

In this regard, ns is the slot number, and 1 is the symbol index in the slot. NCP is a variable that changes with the CP length, and may be set such that NCP=0 for normal _CP and NCP=1 for extended _CP. The generated sequence may be masked by a TRP-specific factor. In a case in which the PRS_ID is not set by RRC, a default setting such as a cell ID may be used.

Note that up to as many PRS sequences as the number of RBs may be generated per one OFDM symbol. That is, identifying the seed number for random number generation enables the terminal device 20 to know the value of the PRS in each RE. Such technique for the generation method is a technique for generating a sequence for every set of as many RBs as the number required for the PRS. That is, a different number of RBs results in a different sequence, which enables more diverse PRS sequences to be generated than by the foregoing method. Meanwhile, the foregoing method allows to identify the value of the RE-mapped PRS when the terminal device 20 knows the seed number for random number generation, thereby reducing the overhead. Either method may be used in the present embodiment.

In addition, in view of interference avoidance and of resistance to selectivity in frequency domain, frequency hopping may be applied to a PRS. Use of frequency hopping prevents exclusive use of a broadband for a certain time period in FR2 or the like, and thus enables transmission of a PRS in parallel with frequency multiplexing with data for another terminal device. Use of frequency hopping can also provide time and frequency diversity. Frequency hopping may be performed such that the PRS is frequency-hopped according to a predetermined pattern. Note that the pattern of hopping may be on a per-RB basis. Note that a PRS may be transmitted on a slot-by-slot basis, and the number of consecutively transmitted slots may be specified by an upper layer. The hopping pattern is specified by an upper layer from predetermined patterns, and the hopping pattern is notified to the terminal device in RRC. The terminal device may perform positioning using the PRS in a bandwidth specified for each frequency hopping. In addition, in a case of transmission of an aperiodic PRS, the aperiodic PRS may be transmitted using multiple ones of slots that include only the PRS in a burst-like manner. Use of multiple slots of PRS improves precision of positioning.

Note that a PRS may be periodically transmitted in time domain according to a setting set by an upper layer. In addition, a PRS may be mapped every slot or every two slots. Moreover, an offset may be added to the transmission start time. Furthermore, a PRS may be transmitted every multiple slots. In addition, a PRS may be transmitted in a mode such as periodic, semi-persistent, or aperiodic assigned thereto. For example, in the case of periodic, the period and the transmission start offset value are set using an RRC parameter or the like. The period and the transmission start offset value are managed by a table or the like, and the index of the table is specified by an upper layer to set the period and the offset value. In the case of semi-persistent, an upper layer specifies a time section during which a PRS is to be periodically transmitted. The foregoing time period is managed by a timer that records the lapse of time or the like, and after a lapse of the time period set by an upper layer or the like, transmission of the PRS is automatically halted. Note that the base station 10 may stop transmission of the PRS even during that time period, and may inform the terminal device 20 of the stop of transmission of the semi-persistent PRS, using DCI, a MAC-CE, or the like. After the lapse of the specified time period, the PRS transmission terminates. The period may be specified in units of slots. In the case of aperiodic transmission, a PRS transmission request is transmitted from the terminal device 20 to the base station 10, and after reception of the command from the terminal device 20, the base station 10 transmits a PRS. In this case, the PRS may be transmitted over multiple slots. To improve positioning precision, the base station 10 may set the period for transmitting a PRS to every slot or every two slots to provide high density transmission in time domain. Note that the PRS may collide with another channel or reference signal according to transmission schedule. In such case, transmission priority between a PRS and another channel or reference signal needs to be determined in a specification. In a case in which a control channel such as PDCCH, a data channel such as PDSCH, or a reference signal such as RS is scheduled for the slot or symbol allocated to a PRS, the PRS may be preferentially mapped. For example, in a case in which a PDSCH is scheduled in advance for, and will be mapped to, the slot or symbol allocated to a PRS, the PRS may be preferentially mapped, and the previously scheduled PDSCH may be untransmitted. Note that in a case in which the slot allocated to a PRS is co-located with the slot allocated to a PDSCH, the slot containing the PDSCH is not transmitted, but the slot containing the PRS is transmitted. That is, multiplexing to transmit part of data and part of a PRS in time and frequency domains is not performed. Note that the PRS transmission may be given a lower priority than the priority of a channel containing important control information such as PDCCH. In addition, in a case in which a mode such as periodic, semi-persistent, or aperiodic is set as described above, and when a PRS and a PDSCH collide, the aperiodic mode may be given a highest priority. The foregoing priority may be applied even when a mode such as periodic, semi-persistent, or aperiodic is not set for the PRS. In addition, when PRSs collide with each other, the priority may be determined based on the type of PRS. For example, in a case in which PRS mappings for the periodic, semi-persistent, and aperiodic modes share the same position, a priority may be set in descending order of aperiodic>semi-persistent>periodic, that is, an aperiodic PRS may be given a highest priority.

Although the minimum value of the period is defined as 160 subframes in LTE, a shorter period that is one of 1, 2, 4, 8, 16, 32, 64, and 128 slots may be included. In addition, the period may be set in units of non-slots. Note that the foregoing parameter of an upper layer for PRS may be managed under names of resource setting, resource set, and resource. Use of such hierarchical parameter management provides a reduction of the overhead. Multiple resources are included in a resource set, and multiple resource sets are included in a resource setting. The resource setting may be called PRS-ResourceConfig in an upper layer. The resource setting manages the resource sets, and includes information such as the identification number of each of the resource sets. The management may be performed according to TS38.331. In addition, the operation in time domain, e.g., periodic, semi-persistent, or aeriodic, of a resource included in a resource set may be specified in the resource setting. In this case, in a case in which the operation in time domain is specified in the resource setting, all the resources included in the resource setting are set the same. In the resource set, a parameter for the multiple resources is defined. For example, the identification numbers of the resources are included. In addition, in a case in which an aeriodic PRS is included, an indication may be provided in the resource set indicating that all the included PRSs are aperiodic. Then, the slot and the position in frequency domain allocated to the PRS may be specified in the resource. Alternatively, instead of using a hierarchical parameter, an RRC parameter for PRS setting may be introduced. For example, an RRC parameter containing parameter information such as PRS-config may be used that indicates a density of PRS in time or frequency domain, and/or an operation in time domain such as periodic, semi-persistent, or aeriodic as described above.

Moreover, to apply an identification number to a reference signal, an antenna port number is used in 3GPP. An antenna port number is a number unused by another reference signal. For NR, numbers are currently used, as defined in TS38.211, such that a number ranging from 1000 to 1999 is used for PDSCH, a number ranging from 2000 to 2999 is used for PDCCH, a number ranging from 3000 to 3999 is used for CSI-RS, and a number ranging from 4000 to 4999 is used for SS or PBCH. For example, a port number in a range from 5000 to 5999 may be used for PRS. An identification number may be generated for a resource under a name such as PRS Indicator. Note that in view of use with a wide beam, a PRS may be used for a low frequency band less than or equal to 6 GHz, called FR1 in NR. Use of a relatively wide beam in FR1 eliminates the need to associate the PRS with a beam number, which thus allows the PRS to be transmitted over a wide range like a broadcast signal. In a frequency band higher than FR1, called FR2, due to use of a beam having a relatively small width, the base station 10 needs to inform the terminal device 20 of information on the beam used for transmission of the PRS to allow the terminal device 20 to accurately receive the PRS. In this case, the base station 10 may associate the beam selected to transmit the SSB used in the initial connection, with the beam for transmitting the PRS. In addition, the base station 10 may associate the beam used in the beam management and suitable for transmitting the selected CSI-RS or SSB, with the beam for transmitting the PRS. The beam information is expressed by, for example, an SSBRI or CRI. By performing positioning using a beam, angle information can be accurately obtained in a short time, thereby enabling low-delay positioning to be provided.

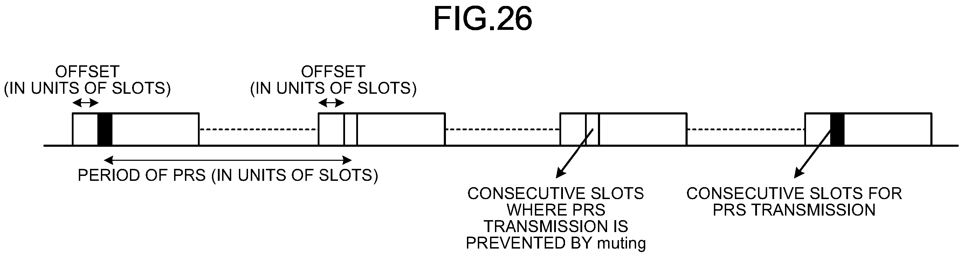

Moreover, an operation may be performed not to transmit a periodically-transmitted PRS at the timing for a specified PRS. This is intended to avoid interference with another signal or frequency during interruption of transmitting. FIG. 25 is a diagram illustrating an example of performing muting according to the second embodiment. In the muting of FIG. 25, a part of PRS in the illustrated section is periodically untransmitted. FIG. 26 is a diagram illustrating another example of performing muting according to the second embodiment. For example, in a case of transmission of four PRSs, a bitmap expressed as "1001" is used. Determination of transmission occasion(s) to be muted in such manner enables a part of PRS transmission to be periodically skipped using a bitmap.

A CSI-RS is generally used in beam management in NR, but a PRS may also be used to perform beam sweeping for beam management intended for positioning. Alternatively, another RS can also be used to perform positioning instead of a PRS. For example, a CSI-RS is used for beam management and the like, allowing a high-precision beam to be directed in the direction where the terminal device 20 exists. In this case, a CSI-RS is used for positioning, and the CSI-RS port number for use in positioning may be notified to the terminal device 20. In the present embodiment, an NZP-CSI-RS defined in Non-Patent Literature 2 or the like is used by way of example. In this case, the terminal device 20 can compute a difference between reception timings of CSI-RSs received from multiple respective base stations 10, and can thus identify the location similarly to the case of performing positioning using a PRS. For example, in FIG. 10, a configuration may be used in which TRP1 uses CSI-RS port number 1, TRP2 uses CSI-RS port number 2, TRP3 uses CSI-RS port number 3, and TRP4 uses CSI-RS port number 4. In NR, because the positions allocated to a CSI-RS are determined according to the maximum number of ports, the base station 10 is required to inform the maximum number of ports to the terminal device 20. In addition, the CSI-RS ports include a port to be multiplexed using Orthogonal Cover Code (OCC), but due to a time difference of arrival between CSI-RSs at the terminal device 20 in a positioning scheme such as OTDOA, use of a port to be multiplexed using Orthogonal Cover Code (OCC) is inappropriate. Use of CSI-RS ports that will cause no co-location of REs in time and frequency domains enables optimum positioning precision to be provided. In the case of use of CSI-RSs, informing the terminal device 20 by an upper layer that CSI-RSs are used for positioning enables the terminal device 20 to realize that the CSI-RSs are used for positioning. An example will be described below in which multiple parameters for positioning are included by an upper layer.

Note that in the case of use of CSI-RSs, the positioning-purpose CSI-RSs may be set by an upper layer. For example, a positioning-purpose parameter may be set to allow a CSI-RS to be mapped such that it will not be co-located with the CSI-RS used for another purpose for positioning in a symbol in time domain or an RE in frequency domain. A parameter declaring a positioning purpose such as CSI-RS-Resource-Positioning may be introduced in an upper layer such as RRC. Note that, to inform that a CSI-RS is used for positioning, the use for positioning may be indicated in a resource setting, a resource set, or a resource. For the positioning usage, a flag named as "positioning" or a flag named after PRS may be defined in a resource setting, a resource set, or a resource in an upper layer such that the flag having a value of 1 indicates that the CSI-RS is used for positioning, and the flag having a value of 0 indicates that the CSI-RS is used for CSI observation. Note that a muting function may be used for CSI-RS. Use of a bitmap on a slot-by-slot basis enables a slot that can be used to transmit the CSI-RS to be specified. Use of a muting function enables interference to be avoided for positioning. Note also that all the cyclic prefixes (CPs) in the OFDM signals transmitted are assumed to have the same length in a case in which a PRS or CSI-RS is transmitted from multiple TRPs, panels, or base stations. For example, 3GPP TS36.211 defines a normal CP and an extended CP, and the extended CP is the longer CP. In a case in which PRSs or CSI-RSs are simultaneously transmitted in OFDM signals from multiple base stations 10, TRPs having a flag of a value, or panels having a flag of a value, it is appropriate that the CPs of all the waveforms have the same length to accurately compute the time difference between multiple PRS or CSI-RS signals received. In addition, use of CPs all having the same length eliminates the need for reading the lengths of CPs from control information, which in turn reduces the overhead needed for the control information.

Meanwhile, in the case of performing positioning using a PRS, it is appropriate that the same numerology, i.e., subcarrier spacing, be used for the PRSs transmitted from the respective TRPs. Standardization of subcarrier spacing over the PRSs from the respective TRPs facilitates RSTD computation. Note that in a case in which a UE computes location information on that UE in a method such as an OTDOA technique, the location information on the terminal device 20 may be notified from the terminal device 20 to the base station 10 using a CSI report or the like. This is because periodically obtaining the location information enables the base station 10 to manage and select a suitable beam in beam management or the like. In addition, allowing determination of the location of the terminal device 20 also in MU-MIMO or the like also enables, for example, optimal scheduling of terminal devices. Alternatively, positioning may be performed using a PRS in FR1 and using a CSI-RS in FR2. As described above, a wide beam is used in the lower frequency band and the UE cannot know beam information transmitted; therefore, the UE may receive a broadcast PRS and compute the RSD. Beam management using a CSI-RS is performed in the higher frequency band to set a beam suitable for the UE, and therefore the method of performing positioning using a CSI-RS provides higher-precision positioning. In addition, although the above description has been described in which a CSI-RS is used in beam management, an SSB may also be used as a signal for beam management. Note that periodic transmission of a positioning-purpose PRS or CSI-RS may be interrupted using Downlink Control Information (DCI). The purpose is to include a process of immediate interruption in view of possibility that periodic communication may obstruct data transmission. Note that in a case in which a positioning-purpose PRS, CSI-RS, or SSB is transmitted, a Radio Network Temporary Identifier (RNTI), which is an identification number given to the terminal device, may be a cell-RNTI (C-RNTI), a configured scheduling RNTI (CS-RNTI), or a semi-persistent CSI RNTI (SP-CSI-RNTI).

A CSI-RS used in NR may be a zero-power CSI-RS (ZP-CSI-RS) for use as a CSI-RS for interference measurement. For example, when interference occurs with the base station 10 in a neighboring cell, a ZP-CSI-RS is transmitted while the base station 10 in that neighboring cell is transmitting a positioning-purpose CSI-RS to avoid interference with the base station 10 in the neighboring cell. Note that similarly to the case of a PRS, a PDSCH need not necessarily be mapped to the slot allocated to the positioning-purpose CSI-RS. The purpose is to reduce interference caused by the PDSCH. In addition, positioning may be performed using a DMRS. Due to multiple symbols allocated in a slot, this option is suitable for positioning. Moreover, interference caused by a CSI-RS may be prevented by setting, by an upper layer such as RRC, the positioning-purpose CSI-RS, another reference signal or a channel, and a power difference. Alternatively, the power level of the CSI-RS may be set to higher than the power level of the other signal(s) to make the CSI-RS less susceptible to interference than the other signal(s). The power difference may be compared with the power of a DMRS, of a CSI-RS for transmission channel estimation or for interference measurement, or of a PTRS. Alternatively, a difference from the power of a PDSCH may also be used.

In the case of use of multiple panels, PRSs are received from the multiple panels. Since the multiple panels are connected to the base station 10, multiple TRPs exist in the same cell. In this case, a different PRS_ID may be assigned to a different panel to generate a different PRS sequence. In addition, since positioning precision will be reduced by an obstacle existing in front of a panel, whether to transmit a PRS may be specified using a flag on a per-panel basis. This flag may be notified to the terminal device 20 using a control signal of an upper or lower layer. A parameter used in an upper layer may be RRC or a MAC-CE, and a lower layer may use DCI.

Positioning using OTDOA can also be performed from an IDLE state or from an INACDTIVE state. The terminal device 20 starts positioning while monitoring is performed on paging information included in a PDCCH transmitted from the base station 10 or on the PDSCH specified in the PDCCH. Note that the paging information contains a notification transmitted for the terminal device 20, and the terminal device 20 interprets the notification and reads a System Information Block (SIB). The SIB is contained in the PBCH and in the PDSCH.

Note also that an SIB contains information necessary for OTDOA. For example, when the base stations 10 of multiple respective cells are used in OTDOA, the cell ID of the used cell and/or the like may be contained. Information on a reference cell may also be contained. In addition, in a case in which multiple panels are used for positioning in a single cell, the panel ID of the used panel or the ID of a reference panel may be included in the SIB, and in a case in which a beam is emitted from each of the panels, one panel may be associated with one group, and group information on the group to which the beam belongs or the like may be included in the SIB. The SIB used for positioning may be assigned a type thereof to indicate that the SIB is a positioning-purpose SIB.

Moreover, in the case in which multiple panels are used in a single cell, the ID of that cell and the number of the panels used for positioning may be included in the SIB. The command for positioning may contain information for positioning, information indicating that a positioning-purpose SIB will be received, and the like. The terminal device 20 receives the positioning-purpose SIB. The positioning-purpose SIB information may be periodically transmitted, or may be transmitted in advance in a case in which the base station 10 causes the terminal device 20 to perform positioning. Information on the time and frequency resources for transmitting a PRS may also be included in the SIB. In addition, the time and frequency resources for a periodically-transmitted PRS may be described. Alternatively, in a case of an aperiodically-transmitted PRS, the time and frequency resources for aperiodically transmitting the PRS may be specified.

Note that after reception of the PRS, the terminal device 20 in an IDLE state or in an INACTIVE state computes the difference between the reception times of multiple PRSs as described above, and reports, to the base station 10, the result of the computation and a result of positioning, or one of these results, according to an instruction from the base station 10 or at the discretion of the terminal device 20. Meanwhile, when multiple panels or TRPs are used to perform positioning, the TRPs or panels may possibly be located close to each other, and such TRPs or panels may be undistinguishable by the terminal device 20. In such case, the situation where these panels or TPRs are located close to each other may be understood using a quasi co-location (QCL) information or a measurement result. In addition, when panels or TRPs are located close to each other, the measurement results may be averaged, or the maximum value or the minimum value of the measurement results may be computed, and the result may be reported to the base station 10.

Note that the LMF transmits an OTDOA_INFORMATION_REQ to an NG_RAN_NODE to start OTDOA positioning. In this case, an OTDOA_INFORMATION_RESPONSE is transmitted toward the NG_RAN_NODE toward the LMF, where the information may contain PRS setting information. For example, the carrier frequency, the PRS bandwidth, the amount of offset in frequency domain, the amount of offset or the transmission interval of the PRS in time domain, the number of consecutively transmitted slots, the number of antenna ports used, whether the periodicity setting is periodic, semi-persistent, or aperiodic, beam information or the beam pair index of the base station 10 or of the terminal device 20, codebook information selected, and the like may be included. The reported information may also include a slot frame number (SFN), the location(s) of the antenna(s) or panel(s), muting information on the PRS, the hopping pattern of the PRS, and PRS density information such as standard, high density, low density for transmission. A value indicating the subcarrier spacing used may also be included. Cyclic prefix (CP) information may also be transmitted. Meanwhile, since CSI-RSs or PRSs are transmitted from different TRPs in OTDOA, information is required that informs the UE of relationships between the TRPs and the respective PRSs or CSI-RSs. Accordingly, the PRS ID that has been set in advance in each of the TRPs or a parameter nID for CSI-RS generation defined in TS38.211 may be provided from an upper layer. Such information may be provided using an RRC message, or the PRS_ID of the PRS or CSI-RS transmitted from each of the TRPs or the parameter nID may be included in OTDOA assistance data transmitted from a location server.

Time division duplexing (TDD) is used in NR, and as described in subclause 11.1.1 of Non-Patent Literature 3, a downlink symbol is set as "D", an uplink symbol is set as "U", and a flexible symbol is set as "F" in a slot. A PRS may be transmitted only using a symbol provided for downlink indicated by "D". Otherwise, unless being used by another symbol, an "F" symbol may also be used to transmit a PRS.

In addition, numerology such as the subcarrier spacing may be changed during measurement. The possible subcarrier spacings are 15 kHz, 30 kHz, 60 kHz, 120 kHz, and 480 kHz in NR, and these values are set unchanged during positioning to ensure precision during positioning. Moreover, a PRS in a different numerology may be transmitted to the terminal device 20 in frequency domain. For example, assuming that 20 RBs of resources are assigned for positioning to the terminal device 20, setting may be such that 10 RBs are transmitted at 15 kHz and 10 RBs are transmitted at 120 kHz. Although the same numerology may be used thoroughly, when different numerologies are used, position computation is performed taking into consideration a frequency error.

Note that location information may be defined using a predetermined grid for positioning. A grid is predetermined, and beam candidates are prepared to allow the base station 10 to emit a beam to the center of the grid. For example, in a case of positioning in a static environment, by selecting a beam upon obtaining of grid information and reporting the selection result to the transmitting device/station by the terminal device 20, the transmitting device/station can identify the location of the terminal device 20. This method is effective in a place such as where the installation environment is fixed. Another example with respect to positioning in an IDLE or INACTIVE state is to use an SSB. The terminal device 20 may receive an SSB from multiple base stations 10 and/or from multiple panels or TRPs. The terminal device 20 may store information about the reception time of that SSB. This information may be, for example, a difference between the reception times of multiple such SSBs. This eliminates, for example, the need for the base station 10 to transmit setting information on the PRS to the terminal device 20, which can reduce the amount of signaling between the base station 10 and the terminal device 20. The terminal device 20 may derive the location of the terminal device itself using information on the reception times of SSBs. The base station 10 and/or the panel or TRP may broadcast, or individually inform the terminal device 20 of, information on the location of that base station itself and/or on the location of that panel or TRP itself. The terminal device 20 may use such information on the location(s) for deriving the location of that terminal device itself. This eliminates, for example, the need for the terminal device 20 to transmit a measurement result to the base station 10, which can reduce the amount of signaling between the base station 10 and the terminal device 20. This also eliminates the need for restarting communication between the terminal device 20 and the base station 10, which enables prompt positioning in a communication system. In another example, the base station 10 may derive the location of a UE using information on the reception times of SSBs. The terminal device 20 may notify the base station of the information on the reception times of SSBs. This notification may be included, for example, in a measurement result report from the terminal device 20 to the base station 10, or in another signaling message. The base station 10 may use the information on the reception times of SSBs to derive the location of that terminal device. This can reduce, for example, the load of deriving the location in the terminal device 20. Furthermore, the first embodiment and the second embodiment may be used in combination. In the first embodiment, angle information is obtained from a selected beam to perform positioning using distance information. In the second embodiment, an RSTD is computed from the reception times of respective reference signals transmitted from multiple transmitters to perform positioning. The average of the locations obtained from these two techniques may be computed. In addition, in a case of performing positioning using multiple base stations, some of the base stations may use the technique described in the first embodiment, and the other base stations may use the technique described in the second embodiment. Note that a reference signal used for positioning has a type of periodicity being set to periodic, semi-persistent, or aperiodic as described above, whereas the location information on the terminal device 20 after the positioning may be notified from the terminal device 20 to the base station or from the base station to the terminal device 20, also in one of the periodic, semi-persistent, and aperiodic manners. Periodic notification of the location such as in the case of periodic or semi-persistent improves precision of service that is sensitive to location information such as urgent notification. In addition, in the case of aperiodic, the base station or the terminal device 20 that wants to have location information reported requests reporting of location information, which causes a report of location information to be generated at the time that has been set by an upper layer or by a lower layer. Aperiodic location information reporting is a reporting technique effective when the base station or the terminal device 20 urgently needs location information. When periodic reporting is selected, the base station or the terminal device 20 reports location information computed, with a period determined by an upper layer, e.g., a period in units of slots. When semi-persisent is set, the base station or the terminal device 20 reports location information computed, during a time period determined by an upper layer, with a period determined by an upper layer, e.g., a period in units of slots. Note that the above reporting techniques may be designated as names such as periodic position report, semi-persistent position report, or aperiodic position report.

Third Embodiment.

In UTDOA, the terminal device 20 transmits a positioning-purpose signal to multiple base stations 10 or TRPs, and the base stations 10 or TRPs cooperate with one another to compute a difference between the reception times of the respective positioning-purpose signals transmitted from the terminal device 20, and use the difference for positioning of the terminal device 20. In this case, the terminal device 20 may simultaneously transmit the signals, or may transmit the signals at respective fixed timings. The signals transmitted from the terminal device 20 may each be an SRS, or a PRS for use in downlink. OFDM or DFT-s-OFDM is used in uplink in NR; specifically, in OFDM, a PRS, an SRS, or a DMRS may be used, or otherwise, when DFT-s-OFDM is used, an SRS or a DMRS may be used.

In addition, OFDM or DFT-s-OFDM is used in uplink in NR. DFT-s-OFDM is characterized in a lower peak to average power ratio (PAPR) than the PAPR in OFDM, thereby enabling transmission at higher power in DFT-s-OFDM than in OFDM. Since a low uplink power level results in low positioning precision in positioning, DFT-s-OFDM may be constantly used in positioning as a default setting. In consideration of a difference in the frequency or in the setting of the reference signal between DFT-s-OFDM and OFDM in uplink in NR, it is desirable for an eNodeB (eNB) that one technique be constantly set as the default during positioning. Meanwhile, when a sufficient power level can be ensured, a mechanism to switch to ODFM may be provided. This is an example embodiment applicable to an E-CID, OTDOA, or UTODA scheme.

Note that a beam search during positioning may result in failure in searching. In this situation, the terminal device 20 may notify the base station 10 of the failure in the beam search. In addition, a beam search may also result in failure when the terminal device 20 moves to the area of another TRP or into another cell during positioning. Also in this case, the terminal device 20 may inform the base station 10 of the failure in the search to stop positioning. Moreover, although the terminal device 20 is allowed to request the base station 10 to change the beam pair for the combination of the base station 10 and the terminal device 20 during beam recovery, it is assumed that positioning is not performed during beam recovery.

Fourth Embodiment.

In the ECID method, the distance between the base station 10 and the terminal device 20 can be computed according to the computation method of Timing Advance (TA). Otherwise, in UTDOA, a PRACH may be used in an uplink signal. In the present embodiment, a configuration of PRACH used for ECID and PRACH will be described. The BS can request the terminal device 20 to transmit a PRACH, and thus includes this request in the PDCCH, wherein the request is called PDCCH_order. In this operation, a positioning-purpose PRACH configuration may be included in this PDCCH. Moreover, this PDCCH may be indicated as being a positioning-purpose PDCCH_order. Furthermore, the PDCCH may include, for positioning, a search space representing the resource(s) for use by DCI in frequency and time domains. In addition, in scrambling the CRC of the PDCCH by means of an RNTI, a positioning-purpose RNTI may be used. Thus, arrangement of the position for the CRC or the DCI of the PDCCH specifically for positioning implies, to the terminal device 20, that positioning-purpose information will be included after reception of the PDCCH. The TA is computed using the PDCCH_order and the PRACH. The base station 10 is ordinarily supposed to transmit a Random Access Response (RAR) after reception of the PRACH, but may be configured not to transmit an RAR when a positioning-purpose PRACH is received. Reception of a positioning-purpose PRACH enables positioning to be performed, thereby eliminating the need to perform RA processing thereafter. After transmission of the positioning-purpose PRACH, the terminal device 20 does not need to receive an RAR from the base station 10. A resource or preamble format is set as the positioning-purpose PRACH configuration in frequency domain and in time domain. In addition, the positioning-purpose PRACH configuration may be predefined as being different from the configuration of a PRACH for other purposes.

The configuration of a positioning-purpose PRACH transmitted in an IDLE state or in an INACTIVE state may be set in an RRC_CONNECTED state. The parameters to be set, including the position of the PRACH in frequency domain and in time domain, the preamble format, and the period in a case of a periodically-transmitted PRACH, are set in the RRC_CONNECTED state. These settings are applied to the positioning-purpose PRACH upon transition to the IDLE state or to the INACTIVE state. The settings for the IDLE state or for the INACTIVE state may be set using an SIB. In addition, information used for positioning may be included in paging information. For example, PRACH setting information may be included. Moreover, information may be included only partly. For example, it is acceptable that only transmission timing be set.

In application of a RAN-based Notification Area (RNA), which is the area for paging information transmitted in the INACTIVE state, the configuration of a positioning-purpose PRACH transmitted in the INACTIVE state may be set on a per-RNA basis. The configuration may be set to be different from the configuration of a PRACH for other purposes. In addition, the configuration of a positioning-purpose PRACH transmitted in the IDLE state may be set on a per-paging area basis. The configuration may be set to be different from the configuration of a PRACH for other purposes. Moreover, in a case of use of multiple TRPs within a single cell, a unique configuration may be used. The configuration of a positioning-purpose PRACH may be set on a per-cell basis. The configuration may be set to be different from the configuration of a PRACH for other purposes.

Note that a positioning-purpose PRACH may be mapped to a resource intended for positioning in time and frequency domains. A unique sequence or preamble format may be provided for positioning. Multiple candidates may be prepared to also allow selection of the PRACH bandwidth.

Fifth Embodiment.

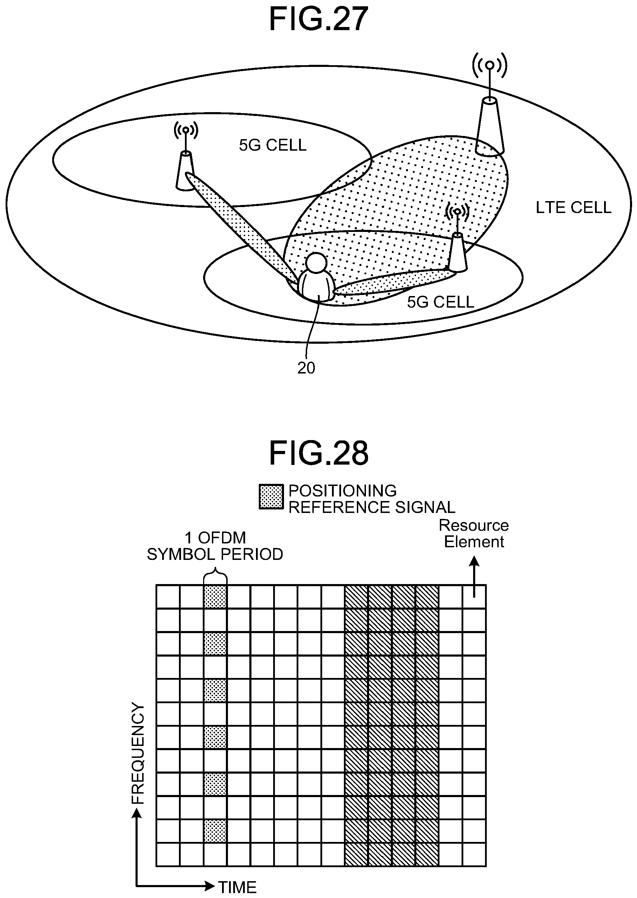

FIG. 27 is a diagram illustrating positioning including switching of methods between LTE and NR according to a fifth embodiment. Due to a wide coverage of an LTE cell, positioning may be performed in an NR cell referring to positioning information obtained from an LTE cell. Positioning may also be performed while switching between NR and LTE positioning schemes. The switching is directed by an upper layer.

Sixth Embodiment.

FIG. 28 is a diagram illustrating an example of mapping of a positioning reference signal according to a sixth embodiment. FIG. 28 is a mapping diagram of a positioning reference signal having a vertical axis representing the frequency and a horizontal axis representing the time. In the present embodiment, a case will be described in which a positioning reference signal is mapped to the positions illustrated in FIG. 28. In FIG. 28, an OFDM symbol dotted with multiple dots represents a symbol for a positioning reference signal. In addition, in the example illustrated in FIG. 28, a positioning reference signal is mapped every two REs in the third OFDM symbol in the time-axis direction. Note that, in FIG. 28, the third OFDM symbol in the time-axis direction accepts only a symbol used for transmission of a positioning reference signal, and does not accept a data symbol, a control signal, or other types of reference signal. In addition, any type of signal may be mapped to a symbol not allocated to a reference signal, indicated by hatched lines in FIG. 28.

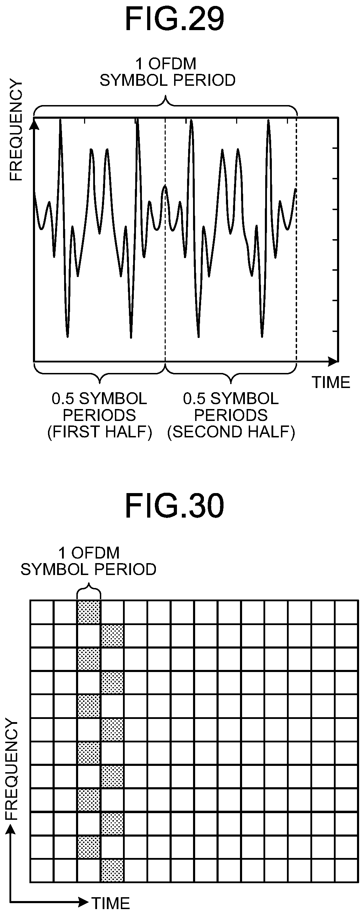

FIG. 29 is a diagram illustrating a signal waveform in one OFDM symbol that is allocated to the positioning reference signal illustrated in FIG. 28. FIG. 29 illustrates that the transmission waveform is a repetition of every half of one OFDM symbol period. It is assumed, by way of example, that one OFDM period is divided into a first half of 0.5 OFDM symbol periods and a second half of 0.5 OFDM symbol periods. The signal in the first half of 0.5 OFDM symbol periods and the signal in the second half of 0.5 OFDM symbol periods have the same waveform. That is, in FIG. 29, a waveform having a similar amplitude and a similar phase is repeated in one OFDM symbol.

FIG. 30 is a diagram illustrating a comparative example of a positioning reference signal being mapped over multiple symbols. In the case in which the signal in the first half of 0.5 OFDM symbol periods and the signal in the second half of 0.5 OFDM symbol periods have the same waveform as illustrated in FIG. 29, synchronization is readily lost during symbol synchronization. This requires the positioning reference signal to be transmitted over multiple symbols as illustrated in the comparative example of FIG. 30. In addition, loss of synchronization also readily occurs in a signal formed of multiple repetitions of a signal having the same power characteristic in one OFDM symbol section.

To solve the issue that synchronization is readily lost during symbol synchronization, the base station 10 in the present embodiment transmits a signal while switching beams every section in which the same waveform appears in one OFDM symbol to prevent repeated observations of the same waveform by the terminal device 20. The terminal device 20 receives a signal on each beam each time the sections are switched from one to another. This scheme prevents the terminal device 20 from receiving the same waveform, thereby enabling occurrence of loss of synchronization to be reduced or prevented in the terminal device 20.

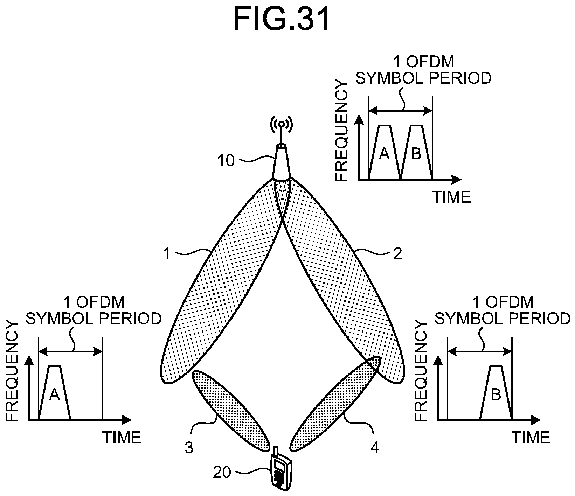

FIG. 31 is a diagram illustrating an example of beams being switched every section in which the same waveform appears in one OFDM symbol according to the sixth embodiment. FIG. 31 illustrates an example in which the same waveform occurs twice in one OFDM symbol. FIG. 31 illustrates two beams being emitted from the base station 10, indicated as beam 1 and beam 2. FIG. 31 illustrates beam 1 and beam 2 as being directed in different directions, that is, in different spatial directions. The directions of beam 1 and beam 2 are adjusted by the base station 10. The base station 10 is capable of directing a beam using an analog beam or a digital beam using digital precoding. The terminal device 20 cannot receive a signal at a maximum power level unless a reception beam is used that is directed to beam 1 or beam 2 emitted from the base station 10.

In the example illustrated in FIG. 31, beam 1 is used to transmit signal A, which is the first half in one OFDM symbol period, and beam 2 is used to transmit signal B, which is the second half in one OFDM symbol period. If beams are not switched every section in which the same waveform appears in one OFDM symbol, the terminal device 20 will receive signal A and signal B in one OFDM symbol period. In contrast, when beams are switched every section in which the same waveform appears in one OFDM symbol, the terminal device 20 will receive only signal A by adjusting the direction of the reception beam to receive the signal transmitted by beam 1. Alternatively, the terminal device 20 will receive only signal B by adjusting the direction of the reception beam to receive the signal transmitted by beam 2. For example, in FIG. 31, a reception process using beam 3 allows the terminal device 20 to receive the signal transmitted by beam 1. When beam 3 is used, the received power of the signal transmitted from beam 2 at the terminal device 20 is lower than the received power of the signal transmitted from beam 1. Alternatively, a reception process using beam 4 allows the terminal device 20 to receive the signal transmitted by beam 2. When beam 4 is used, the received power of the signal transmitted from beam 1 at the terminal device 20 is lower than the received power of the signal transmitted from beam 2. That is, the repeated portion of the signal is not observed by the terminal device 20 in one OFDM symbol section or in a section in which a signal having the same power characteristic is repeated multiple times.

In the present embodiment, no other signal is allocated, as described above, to an OFMD symbol where a positioning reference signal is to be mapped. Due to mapping of a positioning reference signal to a predetermined position, the terminal device 20 knows in advance features of the signal in one OFDM section if information about the positioning reference signal is obtainable, such as the positional spacing of the positioning reference signal in frequency domain and the sequence used as the reference signal. This enables demodulation to be provided even in a case of reception of only signal A or only signal B as illustrated in FIG. 31. Note that in a case in which the sequence used for the reference signal is a pseudo noise (PN) sequence, a value such as C_init used in initialization of the shift register for use in sequence generation may be notified to the terminal device 20 as the information about the positioning reference signal. In addition, in a case in which the sequence depends on the slot, on the symbol index, or on the position relative to another reference signal that is allocated to the positioning reference signal, the foregoing parameter may be notified to the terminal.

Note that in a case in which the base station 10 performs switching of transmission beams in one OFDM symbol period as in the present embodiment, the beam sweeping performed by the base station 10 will be shorter in time than when no beam switching is performed during one OFDM symbol period. For example, in a case of use of a conventional scheme in which 64 beams are swept for transmission using one same beam in one OFDM symbol section, the base station 10 needs at least 64 OFDM symbol periods to emit the 64 beams. In addition, when a time is required for switching of the beams, the base station 10 needs a time equal to or more than 64 OFDM symbol periods to emit the 64 beams. In contrast, in the case in which the base station 10 sweeps 64 beams using two beams in one OFDM symbol period as an example of the present scheme, beams are switched every 0.5 symbol periods, meaning that transmission of the 64 beams will be complete in a minimum of 32 symbol periods. Setting a fixed reception beam during the beam sweeping for the reception beam performed by the base station 10 enables the terminal device 20 to observe received power of beams emitted from the base station 10 in multiple directions during one OFDM symbol period. The base station 10 may increase the number of the beams to sweep, i.e., the number of resources, according to the amount of decrease in the beam sweeping time. To reduce the time period for beam sweeping and to improve the efficiency of beam sweeping during beam sweeping, the base station 10 needs setting of the direction to start beam sweeping or the range of beam sweeping. In the case in which the terminal device 20 performs positioning using multiple base stations or TRPs as illustrated in FIG. 10, the terminal device 20 may notify a nearby-located base station of a result of beam sweeping by a reference TRP. In this regard, a result of beam sweeping is, for example, received power of each beam during beam sweeping performed by the base station 10, obtained by the terminal device 20. Alternatively, a result of beam sweeping is, for example, the transmission beam number selected after beam sweeping. For example, referring to the example of FIG. 10, the terminal device 20 may notify TRPs 2, 3, and 4 of the result of beam sweeping of TRP1, via the server 200. Alternatively, the terminal device 20 may provide notification to TRPs 2, 3, and 4 using a broadcast channel such as a Physical Broadcast Channel (PBCH).

Note that there are various possible methods for providing, for example, setting notification information, which is information transmitted from the base station 10 to the terminal device 20 indicating that beams are switched in one OFDM symbol period. The base station 10 may include the setting notification information into an upper layer signal, and transmit the upper layer signal containing the setting notification information to the terminal device 20 thereby to notify the setting notification information to the terminal device 20. The notification may be a flag, and may be transmitted using an RRC parameter of an upper layer signal. Note that the notification method of information to be notified to the terminal device 20 is not limited to a technique using an RRC parameter, but a method other than the method using an RRC parameter may also be used.

In addition, the setting notification information may also be notified from the server 200 serving for positioning to the terminal device 20. For example, the setting information may be notified to the terminal device 20 from the server 200 that uses an LTE positioning protocol (LPP), or from the server 200 that uses a protocol defined in NRPPa. The setting information may be provided through the base station 10. For example, the information may be notified from the LMF to the base station 10 through NRPPa. Moreover, a server having a positioning function for downlink and a server having a positioning function for uplink may be individually installed. Installation of these servers allows the processing capacity to be assigned separately, which enables a reduction in computation time required for positioning.

Seventh Embodiment.

In performing positioning using positioning reference signals transmitted on downlink or uplink from multiple respective base stations 10, the terminal device 20 needs to manage beam information. Examples of the beam information include the power of beam and the radiation direction of beam. In a case in which, for example, a reference signal is transmitted by a beam, examples of the beam information include the frequency of transmission of the reference signal and the position allocated to the reference signal in time domain and in frequency domain. Note that the position of a reference signal in time domain and in frequency domain is predetermined on a per-beam basis, which enables the terminal device 20 to estimate the intensity of received power by measuring the reception signal at the position allocated to the reference signal. In a case in which a positioning reference signal is transmitted from each of multiple base stations 10 to the terminal device 20 by using a downlink positioning reference signal and the terminal device 20 then performs positioning as illustrated in FIG. 10, the base stations 10 are, or the terminal device 20 is, required to manage the beam information on the beams that transmit the respective positioning reference signals. Note that in the present embodiment, the TRPs in FIG. 10 are each referred to as base station 10. Note also that the base stations 10 may each be located in the same cell as the terminal device 20 or in another cell. In this case, a resource set may be assigned to each of the base stations 10. Note that a resource set is generally used for setting a CSI-RS, which is a reference signal for use in downlink, or for setting an SRS, which is a reference signal for use in uplink.

A resource set for use in positioning may be set as a resource set different from one for a CSI-RS. In view of resource set-specific setting for positioning such as muting or periodic PRS transmission, a resource set may be set as a resource set different from one for a CSI-RS and the like. Note that muting may be set on a per-resource set basis or on a per-resource basis.

Note that a resource set may be applied to an uplink positioning reference signal. In 3GPP LTE, an SRS is used as a positioning reference signal in uplink. Note also that an SRS for use in positioning is referred to herein as positioning-purpose SRS. For example, as described above, the RRC parameter "usage" may be set to Positioning. In addition, usage used as an RRC parameter setting information may be notified, as described above, from the server or from the function to perform positioning to the terminal device 20. In this case, usage is set as information on an upper layer of the information provided from the server or from the function to perform positioning, rather than being used as an RRC parameter. Note that beam information on an SRS may be defined as a resource, and multiple pieces of beam information may then be defined as a resource set. In addition, in a case of performing positioning using an uplink, the terminal device 20 transmits a positioning reference signal toward multiple base stations 10. The base stations 10 each record the reception time of the positioning reference signal transmitted from the terminal device 20, and the multiple base stations 10 refer to mutual information on the reception time each other to identify the location of the terminal device 20 based on the time difference from the reception time in another base station 10. Note that the positioning reference signal is not limited to an SRS, but a PRS for uplink may also be used. Note also that a positioning reference signal also contains information on the position in frequency domain and in time domain allocated to the SRS transmitted from the terminal device 20 using the beam corresponding to each resource. That is, the base station 10 measures the received power of a beam using the SRS mapped to the position in frequency domain and in time domain allocated to the SRS transmitted from the terminal device 20. Note also that the information on the position in frequency domain and in time domain allocated to the SRS transmitted from the terminal device 20 may be information with respect to a set of multiple symbols or information with respect to one symbol.

In the case in which the terminal device 20 transmits a reference signal toward multiple base stations 10, a reference signal transmitted by the terminal device 20 needs to be associated with the destination base station 10 and with the beam number or the resource number, which results in an increase in the amount of control information required. An increase in the amount of control information, in turn, results in an increase in the transmission time, and an increase in the bandwidth, in the number of symbols, and in the number of bits required for the control information.

In this regard, the resource set for an SRS may be associated with the destination base station 10 to transmit the reference signal. Associating the resource set for an SRS with the destination base station 10 will narrow down the information to be transmitted to the terminal device 20 to information about the resource set, such as the identification number of the resource set. This will minimize the amount of control information.

Setting related to the resource set and resources of an SRS may be performed using RRC. Note that the setting method may be a method that does not use RRC. Setting related to the resource set and resources of an SRS may also be performed from each of the base stations 10 individually. In addition, the server or the function to perform positioning may notify the setting information to the terminal device 20.

It is sufficient if the terminal device 20 transmits an SRS according to the setting with respect to the resource set and resources. Thus, it is sufficient if setting is made for as many resource sets as the expected number of the base stations 10.

Note that when the terminal device 20 determines the beam to use in transmitting a positioning-purpose SRS, which is an SRS for use in positioning in uplink, the terminal device 20 needs to perform beam sweeping to select a suitable beam. However, in beam sweeping, the terminal device 20 needs the time for sweeping over a predetermined range, which increases the time required for positioning. Thus, to omit beam sweeping or to reduce the time required for beam sweeping, beam information for use in transmitting a positioning-purpose SRS may be associated with the beam information used upon use for a downlink or uplink reference signal or synchronization signal that has been used. This association of beam information may be performed, for example, by the base station 10 or by the server. Such association of beam information provides an advantage of omitting beam sweeping or reducing the time required for beam sweeping.

Association of a positioning-purpose SRS with another reference signal will now be described in detail. The reference signal or synchronization signal used in downlink may be a CSI-RS, an SSB, a PRS, or a Tracking Reference Signal (TRS). In transmission of a reference signal or synchronization signal, the base station 10 uses a certain beam to transmit such signal. In this operation, associating the uplink beam for the positioning-purpose SRS with the downlink beam used for transmission of the reference signal or synchronization signal enables the terminal device 20 to emit the uplink beam for the positioning-purpose SRS associated with the downlink beam that has been used for transmission of the reference signal or synchronization signal.

Note that the positioning-purpose SRS may also be transmitted on uplink using a beam associated with an SRS used for a purpose other than positioning. In 3GPP NR, an SRS of Release 15 has different use cases including uplink (UL) codebook-based, UL non-codebook-based, UL beam management, and antenna switching. In addition, the foregoing use cases are set for a resource set. Parameter setting operation specific to each of the foregoing use cases is performed, and the parameter value is, or values are, notified to the terminal device 20. The beam for transmitting the positioning-purpose SRS can be specified by setting the direction of the beam used in the applicable one of the foregoing use cases as the beam direction for SRS positioning. Such setting of the beam direction related to an SRS for use in another use case eliminates the need for beam sweeping, thereby enabling a reduction in the time for determining the suitable direction. Setting of the beam direction of an SRS for use in another use case can also reduce the amount of control data to be transmitted to the base station 10 and to the server having a function to perform positioning.

In a case of use of a positioning-purpose CSI-RS as a PRS, the reference signal with which the spatial information is associated can be an SSB, an SRS, an uplink PRS, and the like. A downlink PRS may also be associated with the spatial information on a DMRS. As used herein, the phrase "spatial information on a DMRS" refers to the direction of the beam used for transmission of a DMRS. For example, the direction of the beam used for transmission of a DMRS is associated with the beam number for another downlink reference signal. Alternatively, the direction of the beam used for transmission of a DMRS is associated with, for example, a QCL relationship between the PRS and an RS including the DMRS and another DMRS. Being associated with a QCL relationship means that when a port number X of the PRS and a port number Y of the DMRS have a relationship of QCL, the transmission channel for the port number X of the PRS has transmission channel properties such as spatial information, Doppler shift, and Doppler spread similar to transmission channel properties such as spatial information, Doppler shift, and Doppler spread of the transmission channel for the port number Y of the DMRS. That is, the direction of the beam used for transmission of the PRS may be used also for the DMRS. Note that the setting of the spatial information may be applied in a resource set. In this case, the setting is applied to all the resources included in that resource set.

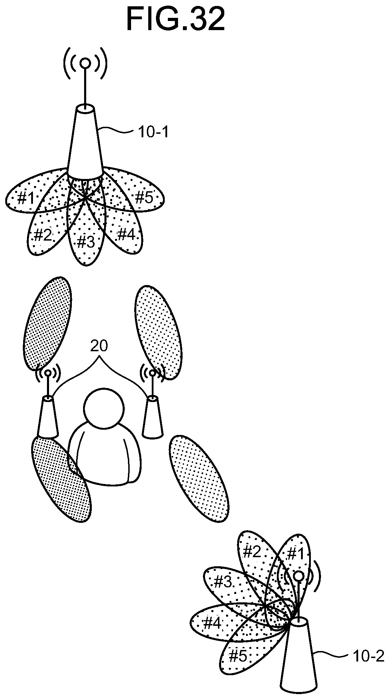

In the case in which the terminal device 20 uses multiple panels in positioning, a resource set may be set on a per-panel basis. Note that providing multiple panels in the terminal device 20 and directing the multiple panels in respective different directions enables the terminal device 20 to transmit an SRS in all directions. In this case, spatial information is set on a per-panel basis. When the panels are directed in different directions, spatial information needs to be set on a per-panel basis. Thus, managing of the spatial information on a per-resource set basis can reduce the overhead required for the setting. Such operation can be implemented by providing as many resource sets as the number of the panels of the UE. In addition, a panel identifier may be set on a per-resource set basis. Setting a panel identifier on a per-resource set basis enables multiple resource sets to be assigned to the same panel. Moreover, a panel identifier may also be assigned to a resource in the resource set. This clarifies which panel is associated with a particular resource or beam, thereby allowing multiple-panel operation to be managed within a resource set. FIG. 32 is a diagram illustrating an example application of association of the panel numbers with the resource sets and resources in a case of use of multiple panels according to a seventh embodiment. FIG. 32 illustrates five resources being provided for each of the base stations 10-1 and 10-2, and two resource sets being provided for each of the two panels of the terminal device 20. For example, a beam for transmission and a beam for reception directed from the terminal device 20 to the base station 10-1 are prepared in one resource set. In FIG. 32, two resources respectively corresponding to the two beams emitted from the terminal device 20 and directed to the base station 10-1 are prepared in one resource set. In addition, a resource for transmission or a resource for reception is associated with resource #2 and resource #4 of the base station 10-1 thereof. That is, the different panels of the terminal device 20 are associated with the respective beams of the base station 10-1 directed in different directions. In the example of FIG. 32, control information that associates the identifier of a resource set with two resource numbers of the base station 10-1 is generated in the server having a function to perform positioning or in the base station 10-1. Note that a downlink reference signal may be associated with an uplink reference signal not only in a range within that cell, but also in a range also including another cell. For example, the cell where the terminal device 20 is located may be associated with a reference signal transmitted from the base station 10 in a neighboring cell. Associating the direction of a beam transmitted from the base station 10 in a neighboring cell with the direction of the beam of the terminal device 20 enables the terminal device 20 to perform positioning using a neighboring cell base station. To this end, the associated beam information may additionally contain a cell identifier, a TRP identifier, or a base station identifier to indicate the association with another cell.

In addition, beams may be used for different purposes in the same resource set. For example, as described above, the application usage of an SRS is divided into UL codebook-based, UL non-codebook-based, UL beam management, and antenna switching; and a positioning-purpose resource, i.e., beam, may be defined in each of applied use cases. In this operation, the features of a beam will be the features suitable for positioning. For example, only a configuration for periodic transmission may be prepared for a positioning-purpose beam.

Moreover, even in a case in which multiple panels are not used in uplink, a resource set may be set for each of multiple base stations 10 when an SRS is transmitted to multiple different base stations 10 from a UE. Transmission of an SRS from a UE to different base stations 10 enables the base stations 10 to cooperate with one another, and to compare the times of SRS receptions to estimate the location of the UE.

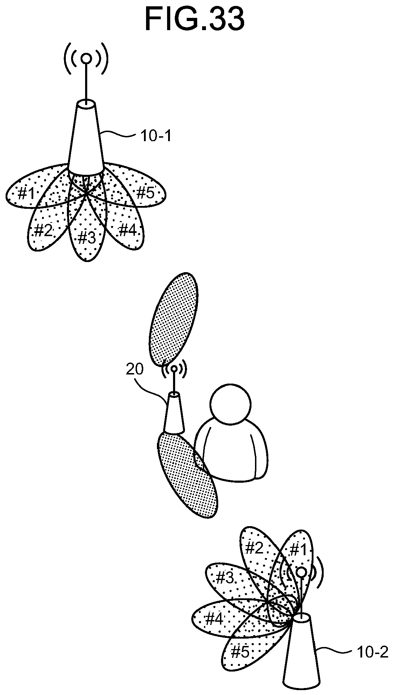

FIG. 33 is a diagram illustrating an example in which a UE transmits an SRS to different base stations 10 according to the seventh embodiment. In FIG. 33, the UE needs to transmit a positioning-purpose SRS to two of the base stations 10, and two resource sets are provided such that resource set #1 and resource set #2 are resource sets respectively corresponding to the base station 10-1 and the base station 10-2. For example, the transmission beam or the reception beam directed from the terminal device 20 to the base station 10-1 is associated with resource #4 of the base station 10-1. Setting resource sets for respective different base stations 10 enables the terminal device 20 to reduce the overhead required for transmission of control information.

Note that the port used for transmission of the PRS is also set. A port is assigned a number, and one or two ports can be set. Ports may be set on a per-resource basis. In the present embodiment, a port represents a logical antenna. The port setting in the example of the present embodiment will be described using an example of a PRS used in downlink. For example, use of two ports enables up to two polarized waves of a physical antenna to be supported. A port can be configured, for example, in terms of a relationship of one port and another port. A port can also be configured in terms of a relationship between the resource and QCL, and ports can be set to indicate that these ports have the same spatial information. QCL is set to one of types A, B, C, and D. Type A includes information relating to Doppler shift, Doppler spread, average delay, and delay spread. Type B includes information relating to Doppler shift and Doppler spread. Type C includes information relating to average delay and Doppler shift. Type D includes spatial information applicable upon reception. QCL may be set for a port or a resource corresponding to a PRS.

The same QCL relationship between ports indicates that the respective propagation channels of propagation have nearly the same set of properties, which allows the transmitting device/station to perform the same transmission processing. In a case in which two ports are set for a PRS, the same QCL relationship or different QCL relationships may be set for the two ports. In a case of setting the same QCL relationship, the signals will propagate through transmission channels similar to each other in regard to the two ports. Alternatively, different QCL relationships may be set for the two respective ports that are set for a PRS. A port for a PRS may be associated with a port for an SSB, a DMRS, a PTRS, a TRS, or a CSI-RS. A port associated with the QCL relationship of the resource may be associated with a port for an SSB, a DMRS, a PTRS, a TRS, or a CSI-RS. A resource may be associated with a port for an SSB, a DMRS, a PTRS, a TRS, or a CSI-RS. Note that port setting for a PRS is applicable to setting of a PRS used in downlink or to setting of a PRS used in uplink.

Eighth Embodiment.

It is desirable that interference from another signal does not occur in the section during which a reference signal used for positioning in uplink is transmitted. In addition, transmission of a large number of positioning-purpose uplink reference signals enables the receiving device/station to average reception signals, which provides an improvement in positioning precision. Thus, a positioning-purpose SRS or an uplink PRS may be mapped to a predetermined slot. An SRS will herein be used as an example. Only an SRS is mapped to the predetermined slot, and the SRS is not multiplexed with another reference signal, a data signal, or a control signal even in frequency domain. A slot in this example represents a symbol formed of 14 OFDM symbols or 14 DFT-s-OFDM symbols, but a slot may represent an aggregation formed of symbols less than 14 symbols. Providing a slot allocated only to a positioning-purpose SRS mitigates interference from another signal during positioning performed by the base station 10.

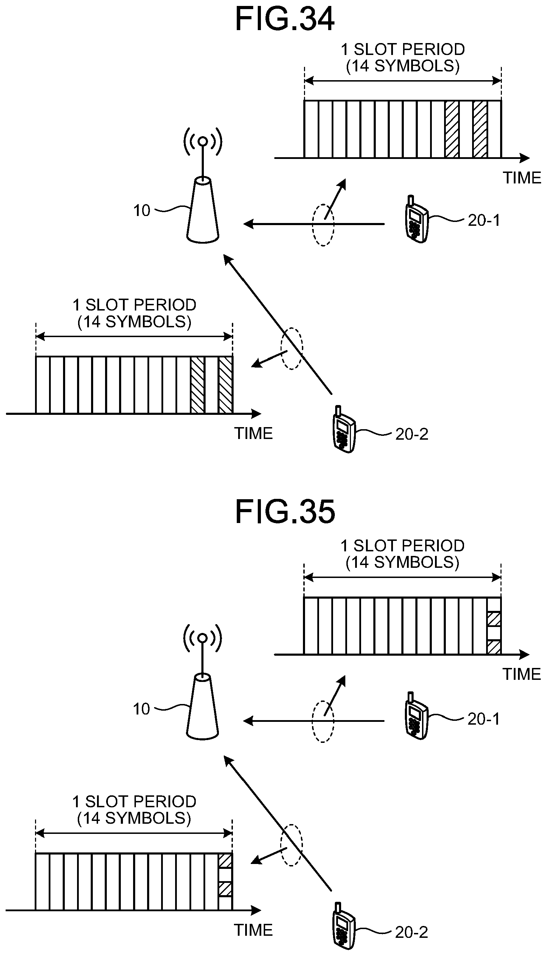

Note that not all the symbols of the 14 symbols in a slot need to be used for a positioning-purpose SRS for the UE. An unused symbol may be used for a positioning-purpose SRS for another UE. FIG. 34 is a diagram illustrating an example of SRS being multiplexed in time domain according to an eighth embodiment. In FIG. 34, a white symbol represents an unused symbol. The SRS symbols for the SRS resource for a second terminal device 20-2 are allocated to the 12th symbol and to the 14th symbol, whereas the SRS resource for the SRS for a first terminal device 20-1 is allocated to the 11th symbol and to the 13th symbol. That is, the base station 10 transmits a reference signal for the first terminal device 20-1 and a reference signal for the second terminal device 20-2 in different symbol periods.

FIG. 35 is a diagram illustrating an example mapping of an SRS multiplexed in frequency domain according to the eighth embodiment. A positioning-purpose SRS may be mapped such that multiple SRSs respectively corresponding to multiple terminal devices 20 are frequency-multiplexed. FIG. 35 illustrates an SRS from the first terminal device 20-1 and an SRS from the second terminal device 20-2 as being multiplexed in frequency domain on the 14th symbol. That is, in the example illustrated in FIG. 35, the base station 10 multiplexes a reference signal for the second terminal device 20-2 and a reference signal for the first terminal device 20-1 in the same symbol period. The position(s) of the symbol(s) for a positioning-purpose SRS may be represented in a form of a bit sequence. For example, the positions of the symbols for a positioning-purpose SRS from the first terminal device 20-1 in FIG. 34 can be represented as 00000000001010. Such information on the position(s) of the symbol(s) for a positioning-purpose SRS is notified to the first terminal device 20-1 by an upper layer or by a lower layer from a server having a function to perform positioning or from the base station 10. In addition, the terminal device 20 transmits an SRS based on the information on the position(s) of the symbol(s) for a positioning-purpose SRS.

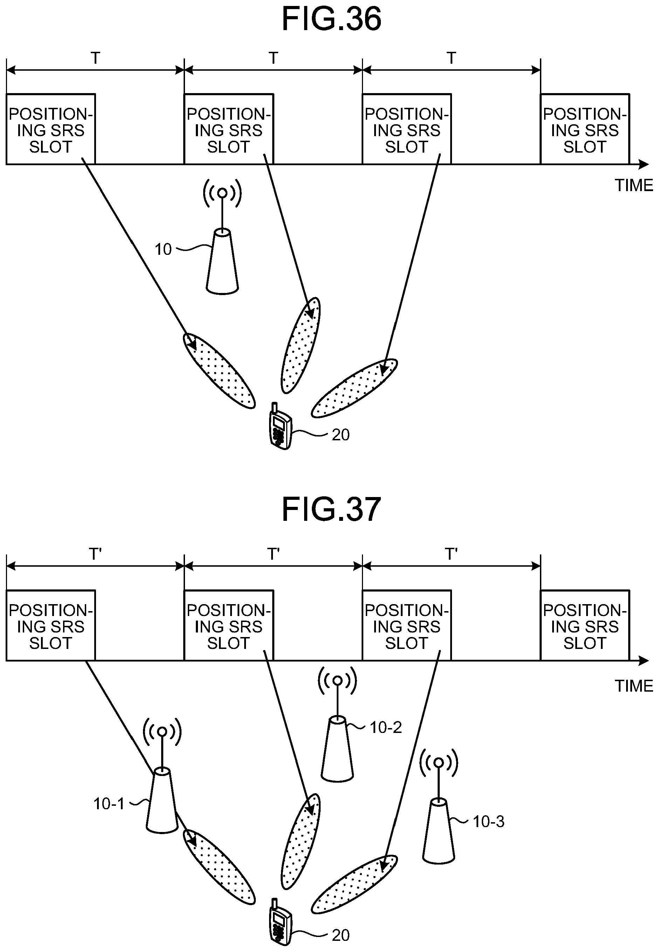

FIG. 36 is a diagram illustrating an example of transmission of information on the resource for an SRS from the terminal device 20 to the base station 10 according to the eighth embodiment. In the present embodiment, information representing the position of a resource for an SRS is referred to as SRS resource information. A resource for an SRS indicates the position allocated to that SRS in frequency domain and in time domain. A resource for an SRS may be allocated over a set of multiple OFDM symbols or a set of multiple DFT-s-OFDM symbols, or on a per-OFDM or per-DFT-s-OFDM symbol basis. To transmit SRS resource information from the terminal device 20 to the base station 10, transmission timing needs to be determined before transmission of each piece of the SRS resource information from the terminal device 20. Knowing by the base station 10 the transmission interval of SRSs transmitted from the terminal device 20 can improve the signal to noise ratio (SNR) of a reception signal of an SRS such as averaging or the like. In addition, in a case in which an SRS is transmitted from multiple terminal devices 20, the multiple terminal devices 20 need to each set the SRS transmission interval and the relative transmission timing in advance by a scheduling function to know the transmission schedule thus to avoid mutual collision of SRSs transmitted from the multiple terminal devices 20. SRS resource information is transmitted, for example, periodically. Note that FIG. 36 indicates the period of resource as T. The value of T may be the number of symbols or a time period, for example, in units of seconds. In addition, the mapping of a resource in a slot in time and frequency domains has no relation to determination of transmission timing of the SRS resource information, but the slot period is important. In this operation, the base station 10 transmits the SRS resource information on multiple different beams. In this case, the base station 10 may perform beam sweeping, or may transmit an SRS when the beam direction has already been determined. In the case in which the base station 10 performs beam sweeping, the beam for transmitting each piece of the SRS resource information is a candidate beam. In the case in which the beam direction has already been determined for transmission, a positioning-purpose SRS is transmitted.

FIG. 37 is a diagram illustrating an example of transmission of information on the resource for an SRS from the terminal device 20 to multiple base stations 10 according to the eighth embodiment. In the example illustrated in FIG. 37, different positioning-purpose SRS slots are used for respective base stations 10-1, 10-2, and 10-3. Note that although the examples of FIGS. 36 and 37 illustrate examples of transmission of an SRS at a constant interval, an irregular period may be used as long as the base stations 10 identifies such irregular period. Note also that the example of FIG. 37 indicates the period of resource as T'. The value of T' may be the number of symbols or a time period, for example, in units of seconds.

In a case in which an upper layer parameter "usage" is Positioning, a positioning-purpose SRS is desirably not multiplexed with data or a control channel on that slot. Owing to setting of a positioning-purpose slot on a per-slot basis, different usages may be time multiplexed on a slot-by-slot basis. Thus, multiplexing of slots of different usages allows flexible setting. Note that an SRS used for positioning may also be referred to as PRS, uplink PRS, or uplink PRS.

Ninth Embodiment.

3GPP suggests that the terminal device 20 derive location information by itself. However, the terminal device 20 conventionally only performs positioning in LTE, for example, derivation of a difference in PRS reception time, and the terminal device 20 is thus incapable of deriving location information thereon. To solve such problem, the base station 10 may appropriately notify the terminal device 20 of base station information, which is information on the base station 10. The terminal device 20 will derive location information on the terminal device 20 itself using the base station information provided from the base station 10.

Examples of the base station information include the following five types. A first type of the base station information is an identifier of the base station 10. A second type of the base station information is information on the location of the base station 10. A third type of the base station information is information on beams of the base station 10. A fourth type of the base station information is information on synchronization of the base station 10. A fifth type of the base station information is information that is a combination of information on the first to fourth types of the base station information. These types of information can be considered as base station information for positioning performed by the terminal device 20. The terminal device 20 performs positioning using, for example, at least one of the first to fourth types of the base station information. Alternatively, the terminal device 20 performs positioning using, for example, information that is a combination of information on the first to fourth types of the base station information.

An identifier of the base station 10 is, for example, a cell identifier. Alternatively, an identifier of the base station 10 may be a TRP identifier. The information on the location of the base station 10 may be, for example, location information derived by the base station 10 using a global navigation satellite system (GNSS). Examples of the information on beams of the base station 10 include an identifier of the beam and information on the beam direction of each beam. Examples of the information on the beam direction of each beam include information on radiation angle of the beam. The information on the beam direction may be information in horizontal direction and/or in vertical direction.

The information on synchronization of the base station 10 is, for example, base station information on a nearby-located, time-synchronized base station 10. As time synchronization, a base station 10 having the same downlink (DL) frame timing may be considered as a nearby-located, time-synchronized base station 10. The base station information on a nearby-located base station 10 may be a cell identifier. Multiple groups each formed of nearby-located, synchronized base stations 10 may be configured. Such groups may each be assigned a group-specific identifier. Use of group identifiers enables identification of which base station 10 is in synchronism.

A method in which the base station 10 notifies base station information to the terminal device 20 will now be described. The base station 10 includes the base station information into broadcast information, and broadcasts the broadcast information. The base station 10 may transmit the broadcast information using a PBCH. Alternatively, the base station 10 may transmit the broadcast information using a PDSCH. The base station 10 may generate information indicative of being base station information for positioning performed by the terminal device 20, and provide the broadcast information together with the information indicative of being base station information. The base station 10 may generate an SIB for information indicative of being the base station information for positioning performed by the terminal device 20. Such operation enables the terminal device 20 to obtain the base station information not only in an RRC CONNECTED state, but also in an RRC IDLE state or in an RRC INACTIVE state. RRC CONNECTED state may also be referred to as CONNECTED state. RRC INACTIVE state may also be referred to as INACTIVE state.

The base station 10 may notify the base station information to the terminal device 20 via separate RRC signaling. Information indicative of being base station information for positioning performed by the terminal device 20 may be introduced to allow the base station information to be provided together with the information indicative of being base station information for positioning. Base station information that has been provided in an RRC CONNECTED state may be used in an RRC INACTIVE state. Upon transition to an INACTIVE state, the terminal device 20 desirably stores the base station information that has been provided in the RRC CONNECTED state. This operation enables setting of base station information specific to each terminal device 20.

The base station 10 may notify base station information on a nearby-located base station 10 to the terminal device 20. This operation enables the terminal device 20 to obtain, from the base station 10, base station information on a nearby-located base station 10. A base station 10 located near the base station 10 is herein referred to as nearby base station. A first base station, which is one of the base stations 10, may transmit base station information on nearby base stations thereof including the base station information on the first base station. This operation enables the terminal device 20 to obtain, from the first base station, base station information on nearby base stations near the first base station. For example, the terminal device 20 obtains base station information on nearby base stations from the first base station. Upon reception of information indicative of being the base station information for positioning performed by the terminal device 20 together with base station information on nearby base stations, the terminal device 20 performs positioning using the obtained base station information on nearby base stations. Positioning may be performed using one of the foregoing methods as appropriate, or using a conventional method as appropriate. The method for positioning is thus not limited. The terminal device 20 derives the location information on that terminal device 20 itself using the base station information specific to each nearby base station that has performed positioning. For example, the location information on that terminal device 20 itself may be appropriately derived using location information, beam radiation angle information, and the like of multiple base stations 10.

The terminal device 20 may perform positioning using information indicating a base station in synchronism therewith based on the received information on synchronization specific to each base station 10. For example, there may be a base station 10 not in synchronism therewith nearby. Use of base station information transmitted from a base station 10 not in synchronism therewith in positioning and in derivation of location information will result in failure of obtaining a correct difference in the reception timing between base stations 10, and will thus result in failure of obtaining correct location information. Thus, by using base station information on nearby base stations in synchronism therewith in positioning and in derivation of location information, the terminal device 20 can derive correct location information on that terminal device 20 itself.

In addition, as another method, the base station 10 may notify the base station information on that base station itself to the terminal device 20. This operation enables a reduction in the amount of information notified to the terminal device 20 by the first base station. For example, the base station 10 includes the base station information on that base station itself into broadcast information, and broadcasts the broadcast information. The terminal device 20 receives the broadcast information from the base station 10, and thus obtains the base station information. For example, the terminal device 20 may perform positioning using the base station information on the base station 10 from which base station information for positioning has been received. For example, the terminal device 20 may perform positioning using the first base station and nearby base stations from which the base station information has been received. The terminal device 20 derives the location information on that terminal device 20 itself using the base station information specific to each base station 10 on which positioning has been performed. For example, the location information on that terminal device 20 itself may be derived using location information and beam radiation angle information on multiple base stations 10.

In a case in which the base station information on the first base station includes information on synchronization, the terminal device 20 may perform positioning using the base station information on nearby base stations in synchronism therewith. Use of the base station information on nearby base stations in synchronism therewith in positioning and in derivation of location information enables derivation of correct location information on that terminal device 20 itself.

The terminal device 20 in an IDLE state or in an INACTIVE state searches for a nearby base station when the received power level with respect to the base station 10 falls below a threshold. The terminal device 20 searches for a nearby base station as a cell reselection process. When the terminal device 20 searches for a nearby base station, positioning may be performed by the terminal device 20. In the search for a nearby base station, broadcast information from a nearby base station may be received to derive the location information on that terminal device 20 itself. This operation enables derivation of the location information on that terminal device 20 itself. A problem may occur, however, if positioning by the terminal device 20 is performed only during searching for a nearby base station. This is because location information on the terminal device 20 is needed in a timely manner depending on the service. A method for solving such problem will be described below.

The base station 10 notifies the terminal device 20 of information instructing the terminal device 20 to perform positioning. For example, the base station 10 may notify, using paging, the terminal device 20 of the information on instruction on positioning. The base station 10 may appropriately provide the notification to the terminal device 20 in a CONNECTED state, to the terminal device 20 in an IDLE state, or to the terminal device 20 in an INACTIVE state. This operation enables, for example, the base station 10 to cause the terminal device 20 to perform positioning by the terminal device 20 at timing suitable for the service.

Paging information may contain information on the SIB containing the base station information. This enables the terminal device 20 to receive the SIB containing the base station information, and obtain the base station information according to information contained in the paging information. The terminal device 20 derives the location information on that terminal device 20 itself using this base station information.

Another method for providing information instructing the terminal device 20 to perform positioning may be that, for example, the base station 10 provides the notification using separate RRC signaling. The base station 10 may associate information on the base station 10 with the information instructing the terminal device 20 to perform positioning, and then provide the information. Alternatively, the base station 10 may provide information instructing the terminal device 20 to perform positioning using MAC signaling. The base station 10 may perform association with information on the base station 10 to be provided using RRC signaling, and then provide the information. Further alternatively, the base station 10 may provide the notification using a PDCCH. The base station 10 may associate the information instructing the terminal device 20 to perform positioning with the information on the base station 10 to be provided using RRC signaling, and then provide the information. These operations can cause the terminal device 20 to promptly perform positioning to be performed by the terminal device 20.

The base station 10 may cause the terminal device 20 to periodically perform positioning by the terminal device 20. For example, the base station 10 notifies the terminal device 20 of period information, which is information indicating the period of positioning to be performed by the terminal device 20. Alternatively, the period of positioning to be performed by the terminal device 20 may be statically predetermined in a specification or the like. Further alternatively, period information may be set from an upper layer to a lower layer of the terminal device 20. For example, period information may be set from an application layer to a non-access stratum (NAS) or access stratum (AS) layer.

The period information by the terminal device 20 may be notified from the base station 10 to the terminal device 20 using, as appropriate, the method for providing the base station information on the base station 10. Alternatively, the base station 10 may include the period information into the base station information for notification of the period information. Another method may be that the period information by the terminal device 20 is notified from the base station 10 to the terminal device 20 using, as appropriate, the method for providing the information instructing the terminal device 20 to perform positioning. These operations enable the terminal device 20 to periodically perform positioning by the terminal device 20.

The terminal device 20 may notify the base station 10 of a positioning result of the terminal device 20. The terminal device 20 may appropriately include, as a positioning result, location information on that terminal device 20 itself derived by the terminal device 20. The terminal device 20 may appropriately use RRC signaling for notification of that result. The terminal device 20 in an IDLE state or in an INACTIVE state transmits a positioning result of the terminal device 20 to the base station 10 using a method in which the notification is provided after the terminal device 20 once transitions to a CONNECTED state. Transition to a CONNECTED state enables the terminal device 20 to notify the base station 10 using RRC signaling.

Another method for transmitting the positioning result of the terminal device 20 to the base station 10 by the terminal device 20 in an IDLE state or in an INACTIVE state may be that the terminal device 20 provides the notification in a random access (RA) process. Alternatively, the terminal device 20 may provide the notification as control plane data. For example, the terminal device 20 provides the notification by including the positioning result into an RRC connection request. The terminal device 20 may provide the notification by including, into the RRC connection request, information that is notification of the positioning result. Upon obtaining the positioning result from the terminal device 20, the base station 10 may stop the RRC connection process. This operation enables the terminal device 20 to notify the positioning result of the terminal device 20 to the base station 10 without establishing an RRC connection. The terminal device 20 can thus promptly notify the base station 10 of the positioning result of the terminal device 20.

The base station 10 forms one or multiple cells. For example, information on beams may be information on beams of each cell. The foregoing base station 10 may be a TRP. For example, the information on beams may be information on beams of each TRP.

The present embodiment has been described in which information on beams is notified from the base station 10 to the terminal device 20. However, in a case in which the LMF is provided in another node, the node including the LMF may provide the notification to the terminal device 20. In this case, the base station information and/or the like may be added at the base station 10 for notification. Alternatively, the base station 10 may notify the base station information to the node including the LMF. These operations enable the LMF to cause positioning to be performed by the terminal device 20. The LMF may be installed in the base station 10, in which case any of the methods described above may appropriately be applied.

Tenth Embodiment.

The terminal device 20 may perform positioning in multiple stages. For example, a first stage of positioning may be performed by the terminal device 20 in an RRC_IDLE or RRC_INACTIVE state, and a second stage of positioning may be performed by the terminal device 20 in an RRC_CONNECTED state. Another example may be that a first stage of positioning and a second stage of positioning are performed by the terminal device 20 in an RRC_IDLE or RRC_INACTIVE state. In each of the multiple stages, the terminal device 20 may perform positioning using a different one of the base stations 10 for positioning, using a different method of positioning, using a different signal for positioning, and allowing a different entity to determine the base station 10 for use in positioning.

For example, the first stage of positioning may include positioning using an SSB intended for the terminal device 20 in an RRC_INACTIVE or RRC_IDLE state. The terminal device 20 in an RRC_INACTIVE or RRC_IDLE state may itself determine the base station 10 for use in positioning. For example, the terminal device 20 may select the base station 10 that will transmit an SSB receivable by that terminal device as the base station 10 for use in positioning.

The LMF may notify the terminal device 20 in an RRC_INACTIVE or RRC_IDLE state that positioning using an SSB is to be performed. The notification notifying that positioning using an SSB is to be performed may be provided, for example, via the base station 10. The notification notifying that positioning using an SSB is to be performed may be provided, for example, during an RRC_CONNECTED state before the terminal device 20 transitions to an RRC_INACTIVE or RRC_IDLE state.

The LMF may notify the terminal device 20 in an RRC_INACTIVE or RRC_IDLE state that positioning using an SSB is to be performed. This notification may be provided, for example, via the base station 10. Examples of the information contained in this notification include eight types of information. A first type of the information is information on the RRC state when the positioning-purpose signal is to be received. A second type of the information is information on necessity of deriving the location of that terminal device 20 itself. A third type of the information is information on the system for use in positioning. A fourth type of the information is information on the positioning-purpose signal. A fifth type of the information is information on the number of times of reception of the positioning-purpose signal. A sixth type of the information is information on the period of reception of the positioning-purpose signal. A seventh type of the information is information on the condition for notification to the base station 10. An eighth type of the information is information that is a combination of the first type of the information through the seventh type of the information. The terminal device 20 derives the location of that terminal device 20 using, for example, at least one of the first type of the information through the seventh type of the information contained in the notification. Alternatively, the terminal device 20 derives the location of that terminal device 20 using, for example, information that is a combination of the first type of the information through the seventh type of the information.

Information included in the first type of the information may be, for example, RRC_INACTIVE or RRC_IDLE, or may be a combination of multiple ones of those described above. The terminal device 20 may be configured to receive the positioning-purpose signal after a transition to the RRC state contained in the first type of the information. This enables the positioning-purpose signal to be received when, for example, the RRC state of the terminal device 20 has changed.

Information included in the second type of the information may be, for example, information indicating that the location of that terminal device 20 itself is to be derived. The terminal device 20 may be configured to derive the location of that terminal device itself when the second type of the information includes information indicating that the location of that terminal device 20 itself is to be derived. The location of that terminal device itself may be derived using, for example, a result of reception of the positioning-purpose signal from the base station 10 for use in positioning. The terminal device 20 may notify the LMF of the derivation result. The derivation result may be notified to the base station 10. The derivation result may be provided by the terminal device 20 when the terminal device 20 is in an RRC_CONNECTED state.

Another example of the information included in the second type of the information may be information indicating that the location of that terminal device 20 itself is not to be derived. When the information included in the second type of the information includes information indicating that the location of that terminal device 20 itself is not to be derived, the terminal device 20 may report the result of reception of the positioning-purpose signal to the base station 10. The report of the result of reception of the positioning-purpose signal may be provided by the terminal device 20 when the terminal device 20 is in an RRC_CONNECTED state.

Information included in the third type of the information may be, for example, 5G system, LTE system, GNSS, Wi-Fi (registered trademark), Bluetooth (registered trademark), or other system. The terminal device 20 may perform positioning or may receive the positioning-purpose signal, using the third type of the information. This can, for example, increase flexibility in positioning performed by the terminal device 20.

Information included in the fourth type of the information may be, for example, SSB, CSI-RS, DMRS, or a signal used in other system.

Information included in the fifth type of the information may be, for example, once or multiple times. The terminal device 20 may repeat a sequence of operations for receiving the positioning-purpose signal as many times as the number of times contained in the fifth type of the information. For example, repetition of a sequence of operations for receiving the positioning-purpose signal multiple times can improve precision of positioning when the terminal device 20 is in an RRC_INACTIVE or RRC_IDLE state.

Information included in the sixth type of the information may be, for example, specified in units of milliseconds or in units of radio frames, or specified using a parameter associated in advance with a predetermined time period. The terminal device 20 may periodically receive the positioning-purpose signal using this information. This enables the location of the terminal device 20 to be tracked in the communication system even when, for example, the location of the terminal device 20 changes.

Information included in the seventh type of the information may be, for example, movement to a different RAN-based Notification Area (RNA) or movement to a different Tracking Area (TA), or may be given by a condition with respect to RSSI. Such condition with respect to RSSI may be, for example, that the RSSI for the terminal device 20 is greater than or equal to, or exceeds, a predetermined value, or is less than or equal to, or falls below, a predetermined value. Another example may be that such information is given by a condition using received power from the base station 10 to which the terminal device 20 has been connected in an RRC_CONNECTED state and received power from another base station 10. The terminal device 20 may start reception of a positioning-purpose signal using this information. This enables, for example, a change in the location of the terminal device 20 or the like to be promptly tracked in the communication system, which can improve stability, for example, in the communication system upon returning to an RRC_CONNECTED state.

Another example for positioning in an IDLE or INACTIVE state may be that a CSI-RS is used. The terminal device 20 may receive a CSI-RS from multiple base stations 10 or multiple panels or TRPs. The terminal device 20 may store information on the reception times of respective CSI-RSs. The information on the reception times of respective CSI-RSs may be, for example, the difference between the reception times of multiple respective CSI-RSs. Use of a CSI-RS enables, for example, positioning to be performed using a narrow beam, which can improve precision of positioning. The base station 10 may notify the terminal device 20 of setting of the CSI-RS. This notification from the base station 10 to the terminal device 20 may be provided when the terminal device 20 is in an RRC_CONNECTED state. Setting of a CSI-RS may, for example, include information on the base station 10, the distributed unit (DU), the TRP, or the panel that transmits the CSI-RS, or include information on the frequency, the time, or the code resource for transmitting the CSI-RS. Examples of the information on the panel include the identifier of the base station 10, the identifier of the DU, the identifier of the TRP, the identifier of the panel, the location, and the like.

The terminal device 20 may use information on the location to derive the location of that terminal device itself. This eliminates, for example, the need for transmission of a measurement result, e.g., the difference in the reception times of respective PRSs, from terminal device 20 to the base station 10, which can reduce the amount of signaling between the base station 10 and the terminal device 20, and eliminates the need for reestablishment of communication between the terminal device 20 and the base station 10. This enables prompt positioning in the communication system. Another example may be that the base station 10 derives the location of the terminal device 20 using information on the reception times of respective CSI-RSs. The terminal device 20 may notify the base station 10 of the information on the reception times of respective CSI-RSs. This notification may be, for example, contained in a measurement result report from the terminal device 20 to the base station 10, or contained in a different signaling message. The base station 10 may use the information on the reception times of respective CSI-RSs to derive the location of that terminal device 20. This can reduce, for example, the load of deriving the location in the terminal device 20. In addition, similarly to the case of SSB, the first embodiment and the second embodiment may be used in combination. In the first embodiment, angle information is obtained from a selected beam to perform positioning using distance information. In the second embodiment, an RSTD is computed from the reception times of respective reference signals transmitted from multiple transmitters to perform positioning. The average of the locations obtained from these two techniques may be computed. Moreover, in a case of performing positioning using multiple base stations 10, some of the base stations 10 may use the technique described in the first embodiment, and the other base stations 10 may use the technique described in the second embodiment.

At the second stage, positioning using a CSI-RS may be performed. The LMF may use the positioning result of the terminal device 20 obtained at the first stage of positioning to determine the base station 10 to be used at the second stage of positioning. That base station 10 may transmit a CSI-RS to the terminal device 20. The terminal device 20 may receive that CSI-RS. The terminal device 20 may notify the result of reception of that CSI-RS to the base station 10. The base station 10 may use that result of reception to determine the location of the terminal device 20. This can, for example, improve precision of positioning, and at the same time, reduce the amount of signaling in the communication system.

This tenth embodiment can improve precision of positioning, and at the same time, increase flexibility in positioning. The efficiency in the communication system can also be improved.

The configurations described in the foregoing embodiments are merely examples of various aspects of the present invention. These configurations may be combined with a known other technology, and moreover, a part of such configurations may be omitted and/or modified without departing from the spirit of the present invention.

Reference Signs List

1, ..., 4 beam; 10, 10-1, 10-2 base station; 20 terminal device; 20-1 first terminal device; 20-2 second terminal device; 101 control unit; 102 transmission signal generation unit; 103 transmission processing unit; 104 reception processing unit; 105 reception signal interpretation unit; 106 positioning processing unit; 200 server; 400 control circuit; 400a processor; 400b memory.

**Claims**

**1.** A base station comprising:

a reception processing unit to receive a signal for use in positioning, transmitted from a terminal device; and
a positioning processing unit to compute a location of the terminal device using the signal for use in positioning.

2. The base station according to claim 1, comprising:

a transmission processing unit capable of forming a plurality of beams toward the terminal device to transmit, by each of the plurality of beams, a synchronization signal containing resource information representing a resource for use in communication with the terminal device, the resource being associated with a corresponding one of the beams in one-to-one correspondence, wherein
the signal for use in positioning is a response signal from the terminal device to the synchronization signal, and includes the resource information, and
the positioning processing unit identifies a beam selected by the terminal device using the resource information included in the response signal, and computes the location of the terminal device using the beam identified.

3. The base station according to claim 2, wherein
the positioning processing unit computes a direction of the terminal device using the beam identified, and computes a distance between the base station and the terminal device using time when the transmission processing unit transmits the synchronization signal and time when the terminal device receives the synchronization signal.

4. The base station according to claim 1, wherein the signal for use in positioning includes a sounding reference signal.

5. The base station according to any one of claims 1 to 4, wherein
the base station cooperates with another base station to compute a distance from the terminal device using time of reception of the signal for use in positioning.

6. The base station according to any one of claims 1 to 5, wherein
the positioning processing unit computes a distance between the base station and the terminal device using a Timing Advance method.

7. The base station according to any one of claims 1 to 6, wherein
the base station computes a distance from the terminal device by switching positioning methods between a positioning scheme of Long Term Evolution and a positioning scheme of New Radio.

8. The base station according to any one of claims 1 to 7, wherein
the base station switches beams within one symbol in an orthogonal frequency division multiplexing scheme to transmit a signal.

9. The base station according to any one of claims 1 to 8, wherein
the base station multiplexes a reference signal for a first terminal device and a reference signal for a second terminal device in a same symbol period, and transmits a resulting signal.

10. A terminal device comprising:

a reception processing unit to receives a signal for use in positioning, transmitted from a base station; and
a positioning processing unit to compute a location of the terminal device using the signal for use in positioning.

11. The terminal device according to claim 10, wherein the signal for use in positioning includes a positioning reference signal that is a reference signal.

12. The terminal device according to claim 11, wherein
the positioning processing unit computes the location using the reference signal being cyclic in time domain and in frequency domain.

13. The terminal device according to claim 11, wherein
the terminal device associates a resource set for a sounding reference signal with a destination base station to transmit the reference signal.

14. The terminal device according to any one of claims 10 to 13, wherein

the terminal device performs positioning using at least one of an identifier of the base station, information on a location of the base station, information on a beam from the base station, or information on synchronization of the base station.

15. The terminal device according to any one of claims 10 to 14, wherein
the terminal device derives the location of the terminal device using information including at least one of information on a Radio Resource Control state, information on necessity of derivation of the location, information on a system for use in positioning, information on the signal for use in positioning, information on a number of times of reception of the signal for use in positioning, information on a period of reception of the signal for use in positioning, or information on a condition for notification to the base station.

16. A positioning method comprising:

a transmission step of, by a terminal device, transmitting a signal for use in positioning; and
a positioning step of, by a base station, computing a location of the terminal device using the signal for use in positioning.

17. The positioning method according to claim 16, wherein
the base station is capable of forming a plurality of beams toward the terminal device,
the positioning method comprises a beam transmission step of, by the base station, transmitting, by each of the plurality of beams, a synchronization signal containing resource information representing a resource for use in communication with the terminal device, the resource being associated with a corresponding one of the beams in one-to-one correspondence,
the signal for use in positioning is a response signal from the terminal device to the synchronization signal, and includes the resource information, and
the positioning step includes identifying a beam selected by the terminal device using the resource information included in the response signal, and computing the location of the terminal device using the beam identified.

18. A wireless communication system comprising:

the base station according to claim 8; and
the terminal device according to claim 10, the terminal device receiving a signal by each beam switched within one symbol in an orthogonal frequency division multiplexing scheme.

# FIG.1

# FIG.2

# FIG.3

# FIG.4

(a)

(b)

10

10

→

DISTANCE
MEASUREMENT

ANGLE
(BEAM NUMBER)

20

20

# FIG.5

START

INITIAL CONNECTION — S1

RECEIVE BEAM INFORMATION AND
INFORMATION NECESSARY FOR DISTANCE
MEASUREMENT — S2

PERFORM POSITIONING — S3

END

# FIG.6

(a)

(b)

(c)

10

10

10

→

→

ANGLE
(BEAM
NUMBER)

DISTANCE
MEASURE-
MENT

20

20

20

# FIG.7

START

| INITIAL CONNECTION | ~S11 |

| RRC_CONNECTED STATE | ~S12 |

| BEAM SEARCH | ~S13 |

| RECEIVE BEAM INFORMATION AND INFORMATION NECESSARY FOR DISTANCE MEASUREMENT | ~S14 |

| PERFORM POSITIONING | ~S15 |

END

# FIG.8

(a)                    (b)                    (c)

~10                    ~10                    ~10

DISTANCE
MEASURE-
MENT

ANGLE
(BEAM PAIRING
NUMBER)

20                     20                     20

# FIG.9

# FIG.10

# FIG.11

```
          ┌──────────────┐
          │    START     │
          └──────────────┘
                 │
                 ▼
┌─────────────────────────────────────┐
│          INITIAL CONNECTION         │ ～S21
└─────────────────────────────────────┘
                 │
                 ▼
┌─────────────────────────────────────┐
│        RRC_CONNECTED STATE          │ ～S22
└─────────────────────────────────────┘
                 │
                 ▼
┌─────────────────────────────────────┐
│            BEAM SEARCH              │ ～S23
└─────────────────────────────────────┘
                 │
                 ▼
┌─────────────────────────────────────┐
│            TRANSMIT PRS             │ ～S24
└─────────────────────────────────────┘
                 │
                 ▼
┌─────────────────────────────────────┐
│        PERFORM POSITIONING          │ ～S25
└─────────────────────────────────────┘
                 │
                 ▼
          ┌──────────────┐
          │     END      │
          └──────────────┘
```

# FIG.12

# FIG.13

# FIG.14

# FIG.15

# FIG.16

# FIG.17

# FIG.18

# FIG.19

# FIG.20

# FIG.21

# FIG.22

FREQUENCY

TIME

# FIG.23

FREQUENCY

TIME

# FIG.24

FREQUENCY

TIME

# FIG.25

OFFSET
(IN UNITS OF SLOTS)

OFFSET
(IN UNITS OF SLOTS)

PERIOD OF PRS (IN UNITS OF SLOTS)

CONSECUTIVE
SLOTS FOR PRS
TRANSMISSION

# FIG.26

OFFSET
(IN UNITS OF SLOTS)

OFFSET
(IN UNITS OF SLOTS)

PERIOD OF PRS (IN UNITS OF SLOTS)

CONSECUTIVE SLOTS
WHERE PRS
TRANSMISSION IS
PREVENTED BY muting

CONSECUTIVE SLOTS FOR
PRS TRANSMISSION

EP 3 860 241 A1

# FIG.27

# FIG.28

POSITIONING
REFERENCE SIGNAL

# FIG.29

1 OFDM
SYMBOL PERIOD

FREQUENCY

TIME

0.5 SYMBOL
PERIODS
(FIRST HALF)

0.5 SYMBOL
PERIODS
(SECOND HALF)

# FIG.30

1 OFDM
SYMBOL PERIOD

FREQUENCY

TIME

# FIG.31

1 OFDM
SYMBOL PERIOD

FREQUENCY

A  B

TIME

10

1

2

1 OFDM
SYMBOL PERIOD

FREQUENCY

A

TIME

1 OFDM
SYMBOL PERIOD

FREQUENCY

B

TIME

3

4

20

# FIG.32

# FIG.33

# FIG.34

1 SLOT PERIOD
(14 SYMBOLS)

TIME

10

20-1

1 SLOT PERIOD
(14 SYMBOLS)

TIME

20-2

# FIG.35

1 SLOT PERIOD
(14 SYMBOLS)

TIME

10

20-1

1 SLOT PERIOD
(14 SYMBOLS)

TIME

20-2

# FIG.36

| POSITION-ING SRS SLOT | | POSITION-ING SRS SLOT | | POSITION-ING SRS SLOT | | POSITION-ING SRS SLOT |
| --- | --- | --- | --- | --- | --- | --- |

TIME

# FIG.37

| POSITION-ING SRS SLOT | | POSITION-ING SRS SLOT | | POSITION-ING SRS SLOT | | POSITION-ING SRS SLOT |
| --- | --- | --- | --- | --- | --- | --- |

TIME

## INTERNATIONAL SEARCH REPORT

| | International application No. |
|---|---|
| | PCT/JP2019/017791 |

A. CLASSIFICATION OF SUBJECT MATTER
Int. Cl. H04W64/00(2009.01)i, H04W16/28(2009.01)i

According to International Patent Classification (IPC) or to both national classification and IPC

B. FIELDS SEARCHED

Minimum documentation searched (classification system followed by classification symbols)
Int. Cl. H04W64/00, H04W16/28

Documentation searched other than minimum documentation to the extent that such documents are included in the fields searched
Published examined utility model applications of Japan       1922-1996
Published unexamined utility model applications of Japan     1971-2019
Registered utility model specifications of Japan             1996-2019
Published registered utility model applications of Japan     1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2018/168670 A1 (NTT DOCOMO INC.) 20 September 2018, paragraphs [0002], [0003], [0056], [0057], | 1, 10-11, 13, 16 |
| Y | [0076]-[0078], [0090]-[0094], fig. 7, 8 (Family: none) | 2-3, 5-7, 9, 12, 14-15, 17 |
| A | | 4, 8, 18 |
| X | WO 2018/168630 A1 (NTT DOCOMO INC.) 20 September 2018, paragraphs [0002], [0003], [0017], [0067]- | 1, 4, 10-11, 13, 16 |
| Y | [0076], [0081]-[0087], fig. 3, 5 (Family: none) | 2-3, 5-7, 9, 12, 14-15, 17 |
| A | | 8, 18 |

☒  Further documents are listed in the continuation of Box C.　　　　☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19.06.2019 | 09.07.2019 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/017791 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | NEC, Discussions on beam reporting [online], 3GPP TSG RAN WG1 #91 R1-1720573, 27 November 2017, section 2, Internet <URL:http://www.3gpp.org/ftp/tsg_ran/WG1_RL1/TSGR1_91/Docs/R1-1720573.zip> | 2-3, 5-7, 9, 17 |
| Y | JP 2017-531934 A (POLTE CORPORATION) 26 October 2017, paragraph [0482] & US 2016/0044630 A1 & WO 2016/019354 A1, paragraph [0490] | 6-7, 9 |
| Y | InterDigital Communications, Considerations on UL DM-RS design for NR [online], 3GPP TSG RAN WG1 adhoc_NR_AH_1701 R1-1700715, 16 January 2017, fig. 1, Internet <URL:http://www.3gpp.org/ftp/tsg_ran/WG1_RL1/TSGR1_AH/NR_AH_1701/Docs/R1-1700715.zip> | 9 |
| Y | JP 2017-525195 A (QUALCOMM INC.) 31 August 2017, paragraph [0092] & US 2015/0365790 A1 & WO 2015/192113 A1, paragraph [0109] | 12, 14-15 |
| Y | JP 2013-510465 A (TELEFONAKTIEBOLAGET L M ERICSSON (PUBL)) 21 March 2013, paragraphs [0055]-[0064], fig. 4A-4D & US 2011/0105144 A1 & WO 2011/056119 A1, paragraphs [0064]-[0074], fig. 4A-4D | 12, 14-15 |
| Y | JP 2000-180186 A (LUCENT TECHNOLOGIES INC.) 30 June 2000, paragraphs [0013]-[0038] & US 6748224 B1 & EP 1014103 A2, paragraphs [0014]-[0039] | 14-15 |
| Y | JP 2016-54518 A (TELEFONAKTIEBOLAGET L M ERICSSON (PUBL)) 14 April 2016, paragraph [0025] & US 2012/0083278 A1, paragraph [0030] & US 2018/0310213 A1 & WO 2012/044232 A2 | 15 |
| Y | JP 2007-267346 A (RADIANT TECHNOLOGIES, INC.) 11 October 2007, paragraph [0068] & US 2007/0232324 A1, paragraph [0074] & WO 2007/111400 A1 | 15 |
| Y | JP 2018-33171 A (KYOCERA CORP.) 01 March 2018, paragraph [0021] & US 2014/0370913 A1, paragraph [0045] & WO 2013/111906 A1 & EP 2809098 A1 | 15 |

Form PCT/ISA/210 (continuation of second sheet) (January 2015)

# EP 3 860 241 A1

## INTERNATIONAL SEARCH REPORT

International application No.

PCT/JP2019/017791

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2010/113699 A1 (NTT DOCOMO INC.) 07 October 2010, paragraphs [0037], [0043], fig. 4 & US 2012/0064915 A1, paragraphs [0046], [0052], fig. 4 & EP 2416549 A1 | 15 |
| P, A | US 2019/0028253 A1 (LG ELECTRONICS INC.) 24 January 2019, paragraph [0031], fig. 2 & WO 2017/164663 A1 & EP 3435566 A1 | 8, 18 |
| A | Ericsson, Beam switching requirement core requirement considerations [online], 3GPP TSG RAN WG4 adhoc_TSGR4_NR_Sep2017 R4-1709694, 18 September 2017, section 2, Internet URL:http://www.3gpp.org/ftp/tsg_ran/WG4_Radio/TSGR4_AHs/TSGR4_NR_Sep2017/Dots/R4-1709694.zip | 8, 18 |

Form PCT/ISA/210 (continuation of second sheet) (January 2015)

# EP 3 860 241 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **3GPP.** Physical layer procedures for data (Release 15). *TS38.214 version 15.2.0,* June 2018
- **3GPP.** Physical channels and modulation (Release 15). *TS38.211 version 15.2.0,* June 2018
- **3GPP.** Physical layer procedures for control (Release 15). *TS38.213 version 15.2.0,* June 2018
- **S. FISCHER.** Observed Time Difference Of Arrival (OTDOA) Positioning in 3GPP LTE. *Qualcomm White Paper*